# EUROPÄISCHE PATENTSCHRIFT

(11) **EP 3 894 232 B1**
(45) Veröffentlichungstag und Bekanntmachung des Hinweises auf die Patenterteilung: **24.01.2024**
(21) Anmeldenummer: 19817685.1
(22) Anmeldetag: 09.12.2019
(51) Int. Cl.: B42D 25/324, B42D 25/328, B42D 25/36, B42D 25/364, B42D 25/369, B42D 25/373, B42D 25/378, B42D 25/45, B42D 25/455, B42D 25/46, B42D 25/47

(54) **VERFAHREN ZUR HERSTELLUNG EINES FOLIENZWISCHENPRODUKTS, FOLIENZWISCHENPRODUKT SOWIE VERFAHREN ZUR HERSTELLUNG EINES PRODUKTS**
METHOD FOR PRODUCING A FILM INTERMEDIATE PRODUCT, FILM INTERMEDIATE PRODUCT AND METHOD FOR PRODUCING A PRODUCT
PROCÉDÉ DE FABRICATION D'UN PRODUIT INTERMÉDIAIRE DE FEUILLE, PRODUIT INTERMÉDIAIRE DE FEUILLE AINSI QUE PROCÉDÉ DE FABRICATION D'UN PRODUIT

(30) Priorität: 14.12.2018 DE 102018132321
(43) Veröffentlichungstag der Anmeldung: 20.10.2021
(73) Patentinhaber: OVD Kinegram AG, 6300 Zug (CH)
(72) Erfinder: ARNOLD, Marcus, 6314 Unterägeri (CH); FRASCHINA, Corrado, 8906 Bonstetten (CH); SCHULER, Philipp, 6443 Morschach (CH); STAUB, René, 6332 Hagendorn (CH); WALTER, Harald, 8810 Horgen (CH)
(74) Vertreter: Louis Pöhlau Lohrentz
(86) Internationale Anmeldenummer: PCT/EP2019/084246
(87) Internationale Veröffentlichungsnummer: WO 2020/120403

(56) Entgegenhaltungen:
- WO-A1-2016/092044
- WO-A1-2016/092044
- WO-A2-2005/108108
- WO-A2-2005/108108
- WO-A2-2007/048563
- Wikipedia: "Collage", , 21. August 2017 (2017-08-21), XP002797009, Gefunden im Internet: URL:https://web.archive.org/web/2017091617 5525/https://de.wikipedia.org/wiki/Collage [gefunden am 2020-01-16]
- Sheena Solitaire: "Make a collage with recycled plastic bags", , 1. Juli 2015 (2015-07-01), XP002797010, Gefunden im Internet: URL:https://www.expressnews.com/lifestyle/ article/Make-a-collage-with-recycled-plast ic-bags-6358329.php [gefunden am 2020-01-17]

## Beschreibung

Die Erfindung betrifft ein Verfahren zur Herstellung eines Folienzwischenprodukts, ein mittels dieses Verfahrens hergestelltes Folienzwischenprodukt sowie ein mittels dieses Verfahrens und/oder dem Folienzwischenprodukt hergestelltes Produkt.

Zur Dekoration und/oder zur Absicherung, insbesondere zur Absicherung vor Fälschung, von Produkten, wie beispielsweise Etiketten und Spritzgussteilen oder Banknoten und ID-Dokumenten, werden Prägefolien, insbesondere Heißprägefolien oder bevorzugt auch Laminierfolien eingesetzt.

So wird beispielsweise in der DE 10 2010 020 039 A1 ein Verfahren zur Herstellung eines Verkleidungsteils aus Kunststoff beschrieben. Hierzu wird eine auf einer Rolle aufgewickelte Heißprägefolie von oben nach unten durch ein Spritzgusswerkzeug geführt. Die Folie wird beim Schließen des Werkzeugs zwischen die Werkzeughälften geklemmt. Beim Einspritzen der Schmelze wird die Folie durch den Druck der Schmelze an die Wand der Kavität gepresst und eine Lackschicht der Heißprägefolie verbindet sich durch die hohe Temperatur der Schmelze mit dem Kunststoff. Nach dem Abkühlen wird die Polyesterträgerfolie von der Lackschicht gelöst und das fertig dekorierte Bauteil kann anschließend entnommen werden.

Das Dokument WO 2016/092044 A1 offenbart den Oberbegriff des Anspruchs 1 oder betrifft ein Absorptionsmedium zum Verbessern der Bedruckbarkeit eines Substrats, eine Transferfolie mit einem solchen

Absorptionsmedium, ein Sicherheitselement mit einem solchen Absorptionsmedium, ein Verfahren zum Individualisieren eines Sicherheitselements und ein so gefertigtes individualisiertes Sicherheitsdokument.

Der Erfindung liegt die Aufgabenstellung zugrunde, ein verbessertes Verfahren sowie ein hierzu eingesetztes Zwischenprodukt anzugeben, mittels dem ein Produkt mit dekorativen und/oder funktionalen und/oder fälschungssicheren Elementen ausgestattet werden kann.

Diese Aufgabe wird gelöst durch ein Verfahren zur Herstellung eines Folienzwischenprodukts nach Anspruch 1.

Hierbei sind sowohl die Empfänger- als auch die ein oder mehreren Spenderfolien sogenannte Transferfolien. Insbesondere in diesem Fall verbleibt keines der Trägersubstrate dieser Folien, wie beispielsweise PET-Trägerfolien, im oder auf dem Endprodukt.

Die Aufgabe wird weiter gelöst durch ein Folienzwischenprodukt nach Anspruch 14. Die Aufgabe wird weiter gelöst durch ein Verfahren zur Herstellung eines Produkts, bei dem ein derartiges Folienzwischenprodukt eingesetzt wird oder bei dem ein derart hergestelltes Folienzwischenprodukt eingesetzt wird.

Durch die Erfindung werden zahlreiche Vorteile erzielt:
So ist es möglich, dekorative und/oder funktionelle und/oder fälschungssichere Elemente, welche voneinander unterschiedlich sind und beispielsweise unterschiedliche Fertigungsprozesse benötigen, in dem Zwischenprodukt zu vereinen und mittels eines einzigen nachfolgenden Applikationsprozesses in das Produkt zu integrieren oder auf das Produkt aufzubringen. Die Empfängerfolie dient so als "Transportmedium" für weitere von den ein oder mehreren Spenderfolien bereitgestellte dekorative und/oder funktionelle und/oder fälschungssicheren Elemente.

Weiter kann hier die Empfängerfolie weitere funktionelle Elemente bereitstellen, welche eine Integration der Folienelemente in das Produkt erst ermöglichen, beispielsweise spezielle Schutzschichten und/oder Trägerschichten und/oder spezielle Kleberschichten, welche für den Applikationsprozess zur Integration in das Produkt erforderlich sind. So sind beispielsweise für die Integration mittels eines Heißprägeprozesses oder mittels Hinterspritzen eine entsprechend ausgebildete Kleberschicht, eine Trägerschicht, Schutzschichten und/oder spezielle Ablöseeigenschaften erforderlich, um einen derartigen Applikationsprozess erst zu ermöglichen. All diese Funktionen müssen nicht durch entsprechende Schichten der Spenderfolie bereitgestellt werden, sodass sich entsprechende Kosteneinsparungen ergeben.

Vorzugsweise werden weitere funktionelle Elemente vor und/oder nach dem Aufbringen ein oder mehrerer Folienelemente durch zusätzlich aufgebrachte Bedruckungen und/oder anderweitige Beschichtungen gebildet.

Im weiteren ist es so möglich, die Spenderfolien bezüglich ihres Aufbaus und ihres Herstellungsprozesses auf die von diesen bereitgestellten dekorativen und/oder funktionellen und/oder fälschungssicheren Elemente zu optimieren, was so nicht der Fall wäre, wenn diese die für den Applikationsprozess auf das Produkt erforderlichen Funktionen erbringen müssten. Weitere Vorteile ergeben sich dann, wenn von den Spenderfolien und/oder von der Empfängerfolie unterschiedliche dekorative und/oder funktionelle und/oder fälschungssichere Elemente bereitgestellt werden. Hierdurch können die jeweiligen Folien auf die Bereitstellung ihrer jeweiligen dekorativen und/oder funktionellen und/oder fälschungssicheren Elemente hin optimiert werden und weiter auch eine Kombination von dekorativen und/oder funktionellen und/oder fälschungssicheren Elementen erzielt werden, welche gar nicht oder nur aufwendig oder anderweitig ungünstig in einem gemeinsamen Fertigungsverfahren vereinbar sind. Es kann insbesondere auch sein, dass ein erstes dekoratives und/oder funktionelles und/oder fälschungssicheres Element auf einer Folie erstellt werden kann, dieses Element jedoch die nachfolgende Herstellung eines weiteren dekorativen und/oder funktionellen und/oder fälschungssicheren Elements auf derselben Folie in weiteren Fertigungsschritten behindert oder gar verhindert. Dies kann beispielsweise auf Materialeigenschaften des ersten dekorativen und/oder funktionellen und/oder fälschungssicheren Elements beruhen, wie beispielsweise auf einer partiellen opaken Metallschicht, welche die Aushärtung des weiteren dekorativen und/oder funktionellen und/oder fälschungssicheren Elements, insbesondere bei einer nachfolgenden UV-Replikation, partiell verhindert bzw. abschirmt.

Weitere Vorteile ergeben sich dadurch, dass die dekorativen Elemente und/oder funktionellen und/oder fälschungssicheren Elemente mit hoher Registergenauigkeit auf-, neben- und übereinander auf dem Produkt appliziert werden können. Dies, da bei der Fertigung des Zwischenprodukts entsprechend optimierte Prozessbedingungen für die "Vereinigung" der dekorativen und/oder funktionellen und/oder fälschungssicheren Elemente geschaffen werden können, welche nicht den Prozessbedingungen für die Applikation auf das Produkt unterworfen sind, und damit beispielsweise geringeren Druckbelastungen, thermischen Belastungen, Staubbelastungen und/oder Registerabweichungen ausgesetzt sind. Weiter ergibt sich hierdurch auch der Vorteil, dass die Ausschussrate deutlich reduziert wird.

Unter Register oder Passer bzw. Registergenauigkeit oder Passergenauigkeit ist bevorzugt eine Lagegenauigkeit zweier oder mehrerer Elemente und/oder Schichten, hier insbesondere einer Spenderfolie und/oder eines Folienelements zur Empfängerfolie zu verstehen.

Dabei soll sich die Registergenauigkeit innerhalb einer vorgegebenen Toleranz bewegen und dabei möglichst gering sein. Gleichzeitig ist die Registergenauigkeit von mehreren Elementen, Teilbereichen, insbesondere ein oder mehreren Folienelementen, Folien, Lagen und/oder Schichten zueinander ein wichtiges Merkmal, um die Prozesssicherheit zu erhöhen.

Die lagegenaue Positionierung erfolgt dabei insbesondere mittels Markierungen, insbesondere mittels sensorisch, vorzugsweise optisch detektierbarer Passermarken oder Registermarken. Diese Markierungen, insbesondere Passermarken oder Registermarken, stellen dabei vorzugsweise entweder spezielle separate Elemente oder Bereiche oder Schichten dar oder sind vorzugsweise selbst Teil der zu positionierenden Elemente oder Bereiche oder Schichten.

Weiter ergeben sich Vorteile dadurch, dass kostenintensive Materialien und/oder Prozesse besonders "sparsam" und zielgenau eingesetzt werden können und mittels an diese angepassten Prozessbedingungen verarbeitet werden können. Auch hierdurch ergeben sich Kosteneinsparungen sowie eine Verringerung der Ausschussrate.

Unter einem Zwischenprodukt, insbesondere unter einem Folienzwischenprodukt, wird hierbei vorzugsweise ein Produkt verstanden, welches dazu bestimmt ist, zur Ausbildung eines Endprodukts noch weiterverarbeitet zu werden, insbesondere zur Ausbildung eines Endprodukts noch auf ein Substrat appliziert zu werden und/oder in ein Substrat integriert zu werden.

Weitere vorteilhafte Ausgestaltungen der Erfindung sind in den Unteransprüchen bezeichnet.

Die Empfängerfolie weist eine Empfängerträgerlage auf und/oder die Spenderfolie weist eine Spenderträgerlage auf. Die Spenderträgerlage und/oder die Empfängerträgerlage besteht vorzugsweise aus einem ein- oder mehrlagigen Trägersubstrat, insbesondere aus PET, BOPP, PEN, PMMA, PC, ABS, PU, PVC und/oder Glas. Das Trägersubstrat ist vorzugsweise zumindest teilweise transparent, insbesondere in einem für das menschliche Auge sichtbaren Bereich und/oder im UV-Bereich. Die Dicke des Trägersubstrats liegt vorzugsweise im Bereich 4 µm bis 150 µm, bevorzugt im Bereich 10 µm bis 75 µm.

Weiter ist es möglich, dass die Empfängerträgerlage und/oder die Spenderträgerlage aus einem Hybridmaterial gebildet ist, welches Kunststoffschichten und Schichten aus Fasermaterial, wie beispielsweise Papierschichten, umfasst.

Vorzugsweise weist die Empfängerfolie, die ein oder mehreren Folienelemente und/oder die ein oder mehreren Spenderfolien mindestens eine Dekorlage und/oder mindestens eine funktionelle Lage und/oder eine Delaminierungslage auf.

Die Empfängerträgerlage kann mindestens eine Dekorlage und/oder mindestens eine funktionelle Lage und/oder eine Delaminierungslage auf einer Seite oder auch auf ihren beiden gegenüberliegenden Seiten aufweisen.

Insbesondere ist es möglich, dass die Empfängerträgerlage auf beiden gegenüberliegenden Seiten jeweils eine Dekorlage aufweist.

Insbesondere ist es möglich, dass die Empfängerträgerlage auf beiden gegenüberliegenden Seiten jeweils eine funktionelle Lage aufweist.

Es ist auch möglich, dass die Empfängerträgerlage auf einer Seite eine Dekorlage aufweist und auf der gegenüberliegenden Seite eine funktionelle Lage aufweist.

Eine funktionelle Lage ist insbesondere eine Lage, welche eine elektrische Funktion und/oder eine mikrofluidische Funktion und/oder eine optische Funktion ausbildet. Die funktionelle Lage bildet vorzugsweise ein oder mehrere Elemente, ausgewählt aus: einen Sensor, einen Touchsensor, ein Display, eine LED oder OLED, eine Antenne, ein RFID-Element, eine Solarzelle, eine elektrische Schaltung.

Eine Dekorlage ist insbesondere ein- oder mehrschichtig und enthält jeweils, vorzugsweise jeweils teilflächig und/oder vollflächig, eine der folgenden Schichten oder eine Kombination der folgenden Schichten:
Ein oder mehrere Lackschichten. Diese Lackschichten enthalten vorzugsweise Farbstoffe und/oder Pigmente, insbesondere farbige Pigmente, optisch variable Pigmente, thermochrome Pigmente, lumineszente Farbstoffe und/oder Pigmente, magnetische Pigmente und/oder elektrisch leitfähige Pigmente. Die Lackschichten sind hierbei bevorzugt opak, semitransparent und/oder transparent ausgebildet.

Die ein oder mehreren Lackschichten werden bevorzugt mittels Drucken aufgebracht, insbesondere mittels Tiefdruck, Hochdruck, Siebdruck, Flexodruck und/oder mittels digitaler Druckverfahren. Auch ist es möglich, dass das Aufbringen mittels weiterer Beschichtungstechniken, wie beispielsweise Schlitzgießen und/oder Sprühen erfolgt. Insbesondere werden die ein oder mehreren Lackschichten partiell und/oder vollflächig aufgebracht.

Ein oder mehrere Schichten enthaltend ein Flüssigkristallmaterial. Diese Flüssigkristallmaterialen werden vorzugsweise an einer jeweiligen Orientierungsschicht ausgerichtet. Hierbei ist es auch möglich, dass das Flüssigkristallmaterial der jeweiligen Schicht Bereiche aufweist, in denen das Flüssigkristallmaterial unterschiedlich orientiert ist und damit unterschiedliche optische Eigenschaften aufweist, beispielsweise eine unterschiedliche Polarisation und/oder einen unterschiedlichen optisch variablen Farbwechseleffekt. Als Flüssigkristallmaterial wird insbesondere ein cholesterisches oder nematisches Flüssigkristallmaterial eingesetzt.

Ein oder mehrere Schichten enthaltend ein Dünnfilmsystem zur Generierung von blickwinkelabhängigen Farbverschiebungseffekten. Ein derartiges Dünnfilmsystem zeichnet sich insbesondere dadurch aus, dass dieses Dünnfilmsystem ein oder mehrere Abstandsschichten aufweist, welche die λ/4- oder λ/2-Bedingung insbesondere für eine Wellenlänge λ im sichtbaren Wellenlängenbereich erfüllen. An den Grenzflächen dieser Abstandsschicht wird das einfallende Licht reflektiert / gebrochen, wodurch ein entsprechender Farbwechseleffekt durch Interferenz generiert wird. Vorzugsweise weist ein derartiges Dünnfilmsystem eine Absorberschicht, insbesondere eine semitransparente Absorberschicht, bevorzugt aus einem metallischen Material, eine dielektrische Abstandsschicht und bevorzugt eine Reflexionsschicht, insbesondere eine opake oder semitransparente Metallschicht, auf. Ein Dünnfilmschichtsystem kann im Weiteren vorzugsweise auch von einer Abfolge von hoch- und niedrigbrechenden dielektrischen Schichten gebildet sein, von denen ein oder mehrere, vorzugsweise zwei oder mehr, die oben angeführte λ/4- oder λ/2-Bedingung erfüllen. Hochbrechende Schichten sind insbesondere Schichten mit einem Brechungsindex von mehr als 1,5. Niedrigbrechende Schichten sind insbesondere Schichten mit einem Brechungsindex von weniger als 1,5.

Ein oder mehrere metallische Schichten. Die ein oder mehreren metallischen Schichten weisen vorzugsweise zwei oder mehr Schichten aus unterschiedlichen Metallen auf. Hierzu werden vorzugsweise Metalle oder Metalllegierungen verwendet, welche für den menschlichen Betrachter über ein unterschiedliches optisches Erscheinungsbild verfügen, beispielsweise aus Al, Cu, Au, Ag, Cr und/oder Sn. Die Metallschichten können hierbei opak, semitransparent und/oder transparent ausgebildet sein.

Unter opak wird hierbei eine Transmissivität im sichtbaren Wellenlängenbereich von weniger als 15 %, unter semitransparent eine Transmissivität im sichtbaren Wellenlängenbereich zwischen 15 % und 60 % und unter transparent eine Transmissivität in zumindest einem Teilbereich im sichtbaren Wellenlängenbereich von mehr als 60 % verstanden.

Ein oder mehrere Volumenhologrammschichten. Eine Volumenhologrammschicht besteht hierbei vorzugsweise aus einem fotosensitiven Material, welches in einem holografischen Belichtungsprozess mit einem Interferenzmuster belichtet ist, bei dem zumindest ein Objektstrahl und zumindest ein Referenzstrahl überlagert werden.

Vorzugsweise wird als Hologramm-Master hierbei ein Master eingesetzt, welcher ein mikrostrukturiertes, insbesondere ein diffraktives und/oder refraktives, Oberflächenrelief aufweist. Bei dem in die Volumenhologrammschicht eingeschriebenen Volumenhologramm kann es sich hierbei um ein Reflexionshologramm oder um ein Transmissionshologramm handeln. Weiter ist es möglich, dass die Volumenhologrammschicht nach Einbelichten des Volumenhologramms noch nachbehandelt wird. Beispielsweise ist es möglich, dass in Teilbereichen oder vollflächig durch eine derartige Nachbehandlung, beispielsweise das Aufbringen entsprechender Stoffe oder durch Strahlung, der Abstand zwischen den Bragg-Ebenen des Volumenhologramms verändert wird, und somit entsprechend die Farbe des Volumenhologramms vollflächig oder teilflächig verändert wird.

Ein oder mehrere Schichten aufweisend eine optisch aktive Oberflächenstruktur oder ein optisch aktives Oberflächenrelief. Diese Schichten bestehen vorzugsweise aus einer Replizierschicht, insbesondere einer Schicht aus einem thermoplastischen und/oder UV-härtbaren Lack. In diese Schicht wird vorzugsweise mittels eines Prägewerkzeugs die jeweilige Oberflächenstruktur eingebracht, insbesondere mittels thermischer Replikation und/oder UV-Replikation.

Bei der Oberflächenstruktur bzw. dem Oberflächenrelief handelt es sich vorzugsweise um eine diffraktive Oberflächenstruktur. Eine derartige Oberflächenstruktur kann einzeln oder in Kombination folgende Elemente aufweisen: computergeneriertes Hologramm, Beugungsstruktur erster oder höherer Ordnung, insbesondere bestehend aus sinusförmigen oder blazeartigen diffraktiven Gittern oder Fresnelartigen Mikrostrukturen, und/oder Beugungsstruktur nullter Ordnung.

Bei der Oberflächenstruktur kann es sich um eine holografische Oberflächenstruktur handeln, welche insbesondere von einem in einem holografischen Prozess hergestellten Oberflächenrelief gebildet wird.

Bei der Oberflächenstruktur handelt es sich vorzugsweise um eine Mattstruktur, insbesondere ein anisotrope oder isotrope Mattstruktur. Derartige Mattstrukturen können hierbei Bereiche aufweisen, in denen sich die Strukturparameter der Mattstruktur voneinander unterscheiden und welche so das Licht in unterschiedlicher Weise streuen, beispielsweise in unterschiedliche Vorzugsrichtungen streuen oder mit einem unterschiedlichen Streuwinkel streuen.

Bei der Oberflächenstruktur handelt es sich vorzugsweise um eine Makrostruktur. Derartige Makrostrukturen weisen vorzugsweise im Wesentlichen refraktiv wirkende Strukturelemente auf. Diese Makrostrukturen weisen vorzugsweise eine Mikrolinsenstruktur, eine Mikroprismenstruktur und/oder eine Mikrospiegelstruktur, deren jeweilige Strukturelemente von Linsen, im Wesentlichen refraktiv wirkenden Prismen und/oder Mikrospiegeln gebildet werden.

Ein oder mehrere Reflexionsschichten. Diese Reflexionsschichten werden insbesondere von metallischen Schichten gebildet, welche transparent, semitransparent und/oder opak sind. Es ist jedoch auch möglich, dass die Reflexionsschichten von dielektrischen Reflexionsschichten gebildet werden. Hierzu werden vorzugsweise Schichten aus einem transparenten niedrig- oder hochbrechenden Material, wie beispielsweise ZnS oder TiO₂ eingesetzt.

Hierbei können die Schichten der Dekorlage insbesondere nicht nur vollflächig, sondern auch teilflächig vorgesehen sein. Dadurch ist es möglich, dass die oben aufgeführten Schichten musterförmig angeordnet sind. Unter musterförmig wird beispielsweise ein graphisch gestalteter Umriss, eine figürliche Darstellung, ein Bild, ein Motiv, ein Symbol, ein Logo, ein Portrait, ein alphanumerisches Zeichen, ein Text, eine Rasterung und/oder dergleichen oder eine Kombination eines oder mehrerer der vorstehenden Muster verstanden.

Vorzugsweise bildet eine Dekorlage ein Sicherheitsmerkmal aus. Ein Sicherheitsmerkmal ist insbesondere ein Merkmal, welches die Fälschungssicherheit eines Objekts erhöht.

Insbesondere ist es auch möglich, dass eine funktionelle Lage und/oder eine Delaminierungslage ein Sicherheitsmerkmal ausbildet.

Eine Delaminierungslage weist bevorzugt eine partielle Ablöseschicht und/oder Haftschicht auf, welche insbesondere bei einem Ablöseversuch ein Delaminieren des Folienzwischenprodukts und/oder ein Zerreißen von Schichten des Folienzwischenprodukts bewirkt.

Insbesondere ist unter einer Delaminierungslage eine Partial Release-Lage zu verstehen. Dies ist eine Kunststofflage mit mehreren Schichten, deren Verbund lokal unterschiedlich stark ist. Dadurch wird bevorzugt eine partielle Zerstörung des Merkmals bei Ablöseversuchen erreicht.

Die Empfängerfolie ist eine Empfängertransferfolie, insbesondere eine Heißprägefolie, Kaltprägefolie oder Thermotransferfolie.

Mindestens eine der ein oder mehreren Spenderfolien ist eine Spendertransferfolie, welche insbesondere ausgewählt ist aus: Heißprägefolie, Kaltprägefolie und Thermotransferfolie.

Bevorzugt ist mindestens eines der Folienelemente ein Ausschnitt einer Spendertransferfolie, insbesondere einer Heißprägefolie, Kaltprägefolie und/oder Thermotransferfolie.

Eine Prägefolie umfasst vorzugsweise ein Trägersubstrat, beispielsweise aus PET, mit darauf ablösbar aufgebrachten Transferlagen. Die Transferlagen lassen sich insbesondere mittels geeigneter Verfahren, beispielsweise Heißprägung, Kaltprägung und/oder Thermotransfer, bevorzugt in bestimmten Formen auf ein weiteres Substrat übertragen.

Es hat sich als vorteilhaft erwiesen, wenn Schritt c) mittels Heißprägen, Kaltprägen und/oder Thermotransfer durchgeführt wird.

Insbesondere ist die Empfängerfolie eine Heißprägefolie und mindestens eine der ein oder mehreren Spenderfolien ist eine Heißprägefolie. Bevorzugt wird die Empfängerfolie als eine Heißprägefolie bereitgestellt und mindestens eine der ein oder mehreren Spenderfolien wird auch als eine Heißprägefolie bereitgestellt. Insbesondere ist mindestens eines der Folienelemente ein Ausschnitt einer Heißprägefolie und die Empfängerfolie ist eine Heißprägefolie.

Vorteilhaft ist hierbei, dass Folienelemente, welche mit hohem Druck und/oder hoher Temperatur hergestellt werden müssen, auf einer Empfängerfolie angeordnet werden können, welche Merkmale aufweist, die bei derart hohem Druck / hohen Temperaturen beschädigt werden.

Weiter ist es möglich, dass die Empfängerfolie eine Empfängerlaminierfolie ist, dass mindestens eine der ein oder mehreren Spenderfolien eine Spenderlaminierfolie und/oder dass mindestens eines der ein oder mehreren Folienelemente ein Ausschnitt einer Spenderlaminierfolie ist. Vorzugsweise werden hierbei die ein oder mehreren Folienelemente auf die Empfängerfolie mittels Laminieren aufgebracht.

Bei einer Laminierfolie handelt es sich insbesondere um eine Folie, bevorzugt um eine Kunststofffolie, bestehend aus mehreren Schichten, deren Verbund nicht trennbar ist.

Die Empfängertransferfolie weist eine Empfängerträgerlage und eine Empfängertransferlage auf, wobei die Empfängertransferlage von der Empfängerträgerlage ablösbar ist und/oder eine Empfängerablöseschicht aufweist, welche zwischen der Empfängertransferlage und der Empfängerträgerlage angeordnet ist.

Die Spendertransferfolie weist eine Spenderträgerlage und eine Spendertransferlage auf, wobei die Spendertransferlage von der Spenderträgerlage ablösbar ist und/oder eine Spenderablöseschicht aufweist, welche zwischen der Spendertransferlage und der Spenderträgerlage angeordnet ist.

Es hat sich als vorteilhaft erwiesen, dass die Empfängerablöseschicht und/oder die Spenderablöseschicht mehrschichtig ausgebildet ist und zumindest eine Wachsschicht aufweist.

Vorzugsweise ist eine Ablöseschicht derart gestaltet, dass eine zerstörungsfreie Trennung mehrerer über die Ablöseschicht in Verbindung stehender Schichten bei einer Aktivierung der Ablöseschicht herbeigeführt wird, bevorzugt durch thermische und/oder mechanische Aktivierung. Unter ablösbar ist bevorzugt zu verstehen, dass sich eine Verbindung trennen lässt, wobei keine und/oder nur die Ablöseschicht zerstört wird.

Es ist bevorzugt auch möglich, dass eine Ablöseschicht so angeordnet ist, insbesondere partiell zwischen mehreren Schichten aufgebracht ist, dass bei einem Ablösen eine gewünschte Zerstörung und/oder Formgebung mindestens einer der anliegenden Schichten stattfindet.

So ist es beispielsweise bevorzugt möglich, dass beim Ablösen einer Spendertransferlage von einer Spenderträgerlage eine Formgebung mindestens eines mittels der Spendertransferlage übertragenen Folienelements stattfindet.

Weiter ist es insbesondere möglich, dass beim Ablösen der Empfängertransferlage von der Empfängerträgerlage eine Formgebung von Bereichen der Empfängertransferlage stattfindet.

Weiter ist es möglich, dass die Empfängerablöseschicht und/oder die Spenderablöseschicht eine Schicht aufweist, die als Druckannahmeschicht für einen nachfolgenden Bedruckungsschritt ausgelegt ist.

Weiter ist es möglich, dass die Empfängerablöseschicht und/oder die Spenderablöseschicht zumindest eine Kleberschicht aufweist, insbesondere mit einer Dicke von 0,2 µm bis 20 µm, bevorzugt mit einer Dicke von 0,2 µm bis 10 µm.

Hierdurch ist es insbesondere möglich, dass das Folienzwischenprodukt nach einem Ablösen einer Spendertransferlage und/oder der Empfängertransferlage eine freigelegte Kleberschicht aufweist, welche vorzugsweise für die Herstellung eines Produkts verwendet wird, bevorzugt indem das Folienzwischenprodukt auf ein Zielsubstrat appliziert wird.

Weiter werden im Schritt c) vorzugsweise folgende Schritte durchgeführt:
c1) in Kontakt bringen von ein oder mehreren Spendertransferfolien mit der Empfängerfolie,
c2) zumindest bereichsweises Ablösen, insbesondere mechanisches Trennen, der Spenderträgerlage von ein oder mehreren ersten Teilbereichen der jeweiligen Spendertransferlage derart, dass die ein oder mehreren ersten Teilbereiche als Folienelemente auf der Empfängerfolie verbleiben,
c3) optional Abziehen der jeweiligen Spenderträgerlage mit ein oder mehreren zweiten Teilbereichen der jeweiligen Spendertransferlage von den ein oder mehreren Folienelementen.

Weiter ist es vorteilhaft, dass ein oder mehrere der ersten Teilbereiche im Schritt c) individuell festgelegt werden, insbesondere mittels eines digitalen Druckverfahrens, vorzugsweise mittels Inkjet-Drucks, mittels eines Thermotransferdruckkopfs und/oder mittels Bestrahlung, insbesondere mittels Ansteuerung einer Belichtungsmatrix.

Es ist weiter möglich, dass im Schritt c) ein oder mehrere Thermoelemente, insbesondere eines Thermotransferdruckkopfes, angesteuert werden.

Vorzugsweise wird in Schritt c) auf ein oder mehrere der Spenderfolien und/oder auf die Empfängerfolie in ein oder mehreren der ersten Teilbereiche eine Kleberschicht, insbesondere mittels eines digitalen Druckverfahrens, aufgedruckt, in den ein oder mehreren zweiten Teilbereichen jedoch nicht aufgedruckt.

Weiter ist es möglich, dass in Schritt c) eine Kleberschicht, insbesondere eine Kleberschicht der Empfängerfolie, bevorzugt eine Empfängerkleberschicht, und/oder eine Kleberschicht ein oder mehrerer der Spenderfolien, bevorzugt eine Spenderkleberschicht, in den ein oder mehreren ersten Teilbereichen aktiviert wird, insbesondere thermisch und/ oder durch Bestrahlung aktiviert wird, in den ein oder mehreren zweiten Teilbereichen jedoch nicht aktiviert wird. Insbesondere wird in Schritt c) die Kleberschicht durch thermische Erweichung der Kleberschicht und/oder durch thermisch und/oder durch Bestrahlung induziertes Vernetzen der Kleberschicht aktiviert.

Vorzugsweise ist unter einer Kleberschicht, welche aktiviert ist, eine Kleberschicht zu verstehen, deren klebende Eigenschaft ausgelöst ist, bevorzugt die klebrig ist. Insbesondere kann eine aktivierte Kleberschicht einen Verbund, vorzugsweise zwischen zwei Oberflächen, herstellen. Nachdem der Verbund hergestellt ist, ist die Kleberschicht vorzugsweise nicht mehr klebrig. Insbesondere ist ein UV-vernetzter Kleber nach dem Aushärten nicht mehr klebrig und ein Heißsiegelkleber nach dem Abkühlen nicht mehr klebrig. Es ist auch möglich, dass eine PSA-Kleberschicht (PSA = pressure sensitive adhesive) nachdem der Verbund hergestellt ist klebrig bleibt, wie dies beispielsweise insbesondere bei einem Tesa-Klebeband oder Post-It zu beobachten ist.

Die Kleberschicht weist insbesondere eine Schichtdicke von 0,2 µm bis 20 µm, bevorzugt eine Schichtdicke von 0,2 µm bis 10 µm, auf.

Es hat sich als vorteilhaft erwiesen, dass zumindest in eine der ein oder mehreren Spenderfolien, insbesondere in die Spendertransferlage, ein oder mehrere Durchtrennungen, Leerstellen und/oder Ausnehmungen eingebracht werden, wobei vorzugsweise die ein oder mehreren Durchtrennungen, Leerstellen und/oder Ausnehmungen zwischen den ersten und zweiten Teilbereichen der jeweiligen Spendertransferlage eingebracht werden.

Unter Leerstellen sind insbesondere Bereiche zu verstehen, in welchen keine Schicht vorgesehen ist.

Unter Ausnehmungen sind insbesondere teilweise entfernte Bereiche und/oder Trennungen in einer Schicht zu verstehen, welche die Schicht vorzugsweise nicht vollständig durchdringen.

Unter Durchtrennungen sind insbesondere entfernte Bereiche und/oder Trennungen in einer Schicht zu verstehen, welche die Schicht vorzugsweise vollständig durchdringen.

Weiter ist es möglich, dass die Empfängerfolie und/oder mindestens eine der ein oder mehreren Spenderfolien mit ein oder mehreren Durchtrennungen, Leerstellen und/oder Ausnehmungen bereitgestellt wird.

Die ein oder mehreren Durchtrennungen, Leerstellen und/oder Ausnehmungen werden vorzugsweise musterförmig vorgesehen.

Die Form der ein oder mehreren Durchtrennungen, Leerstellen und/oder Ausnehmungen wird insbesondere ausgewählt aus: streifenförmig, rund, kreisförmig, oval, vieleckig, rechteckig, quadratisch, in Form von alphanumerischen Zeichen, Logos, Mikrotexten, Bildern, Portraits, Piktogrammen, wobei die Form der ein oder mehreren Leerstellen, Ausnehmungen und/oder Durchtrennungen vorzugsweise gleich oder unterschiedlich ist.

Vorzugsweise bilden die ein oder mehreren Durchtrennungen, Leerstellen und/oder Ausnehmungen, insbesondere bei einer Betrachtung senkrecht auf eine die entsprechenden Durchtrennungen, Leerstellen und/oder Ausnehmungen aufweisende Schicht, ein oder mehrere Linien. Vorzugsweise sind die ein oder mehreren Linien, insbesondere entlang einer ihrer Länge folgenden Richtung, geschlossen, endlos und/oder unbegrenzt. Weiter ist es möglich, dass die ein oder mehreren Linien, insbesondere entlang einer ihrer Länge folgenden Richtung, offen, begrenzt und/oder unterbrochen sind.

Weiter ist es möglich, dass die ein oder mehreren Durchtrennungen, Leerstellen und/oder Ausnehmungen, insbesondere die ein oder mehreren Linien, vollständig und/oder teilweise am Umfang eines Bildes angeordnet sind.

Auch ist es möglich, dass die ein oder mehreren Durchtrennungen, Leerstellen und/oder Ausnehmungen beispielsweise in einer regelmäßigen Anordnung, Menge, Form und/oder Größe, insbesondere als Perforation, eingebracht sind bzw. werden.

Die ein oder mehreren Durchtrennungen, Leerstellen und/oder Ausnehmungen werden insbesondere mittels Schneiden, Stanzen, insbesondere Hubstanzen, semirotatives Stanzen und/oder rotatives Stanzen, Nadeln und/oder Laser ausgebildet.

Weiter ist es vorteilhaft, dass die Spenderträgerlage von der Spendertransferlage in dem Schritt c) in einem Abzugswinkel abgezogen wird, insbesondere in einem Abzugswinkel zwischen 30° und 180° abgezogen wird, bevorzugt zwischen 90° und 180° abgezogen wird.

Insbesondere wird mittels Durchtrennungen, Ausnehmungen, Leerstellen und/oder einem Abzugswinkel im oben aufgeführten Winkelbereich ein randscharfes Aufbringen der Folienelemente begünstigt. Somit sind kostengünstigere Werkzeuge, wie beispielsweise nicht individualisierte Prägestempel, zum Aufbringen der Folienelemente auf die Empfängerfolie möglich.

Insbesondere ist es auch möglich, eine Kleberschicht vollflächig über den ersten und den zweiten Teilbereich einer Spenderfolie aufzubringen und die entsprechenden Folienelemente mittels eines individualisierten Prägestempels auf die Empfängerfolie aufzubringen.

Es ist zweckmäßig, wenn der Abzugswinkel über mindestens eine Rolle eingestellt wird. Weiter ist es zweckmäßig, wenn die Spenderträgerlage über eine Kante abgezogen wird. Besonders zweckmäßig sind sehr spitz zulaufende Kanten, insbesondere mit einem kleinen Winkel zwischen den Kanten, welche einen eng lokalisierten Abzugsort mit einem großen Abzugswinkel, bevorzugt bis zu 180°, erlauben.

Weiter vereinfacht insbesondere der Einsatz mechanischer Trennhilfen das Ablösen von Spendertransferlagen von der jeweiligen Spenderträgerlage. Mechanische Trennhilfen können beispielsweise Blasluftleisten oder Trennschwerter sein. Weiter ergibt sich insbesondere der Vorteil, dass Ablösekräfte der Spendertransferlagen von den jeweiligen Spenderträgerlagen verringert werden, sodass vorzugsweise thermische und/oder mechanische Belastungen bei der Herstellung des Folienzwischenprodukts verringert werden können und insbesondere ein ungewolltes Beschädigen der Empfänger- und oder Spendertransferlagen vermieden wird.

Weiter ist, vorzugsweise zumindest bei der Durchführung des Schritts c), die Ablösekraft zwischen Spenderträgerlage und Spendertransferlage geringer als die Ablösekraft zwischen Empfängerträgerlage und Empfängertransferlage, insbesondere um mindestens 10%, vorzugsweise mindestens 20% geringer.

Eine Ablösekraft kann vorzugsweise in Anlehnung an die FINAT-Methode FTM 2 ermittelt werden. Dazu wird eine Folie mittels eines doppelseitigen Klebebandes auf einem flachen Substrat angebunden, wobei die Seite mit der Ablöseschicht zum Klebeband zeigt. Verwendet wird beispielsweise Sellotape 4485 Duplomit einer Breite von 25 mm. Angepresst wird bevorzugt mit einem FINAT-Handroller mit einem Auflagegewicht von 2500g +/- 100g. Die Probenlänge beträgt mindestens 20 cm. Mit einer Zugprüfmaschine, beispielsweise der Firma Zwick, wird die Ablösekraft bei einem Abzugswinkel von 90° und einer Geschwindigkeit von 300 mm/min ermittelt.

Anhand der Messkurve kann insbesondere die mittlere Ablösekraft bestimmt werden und liegt typischerweise im Bereich von 0,3 cN bis 75 cN pro cm Streifenbreite. Dabei ist bevorzugt zu beachten, dass sich der gemessene Wert aus der Ablösung der Transferlagen vom Träger und dem Aufreißen der Transferlagen an den Rändern (des Streifens) zusammensetzt. Bei einem optionalen Einbringen von Ausnehmungen, Durchtrennungen und/oder Leerstellen in die Transferlagen, beispielsweise durch ein Anstanzen der Transferlagen, entfällt das Aufreißen.

Unter Rändern sind vorzugsweise die sichtbaren Kanten bei Betrachtung senkrecht auf eine von einer Folie aufgespannte Ebene zu verstehen.

Wird der Abzugswinkel vergrößert, so nimmt typischerweise die gemessene Ablösekraft deutlich ab. Bei einem Abzugswinkel von 180° sinkt beispielsweise die gemessene Kraft auf weniger als 50% verglichen mit der Kraft gemessen bei einem Abzugswinkel von 90°.

Durch eine geeignete Prozessführung, insbesondere bei einem Kaltprägen und/oder Heißprägen, in Schritt c), hat sich überraschenderweise gezeigt, dass selbst Spendertransferlagen mit relativ hohen Ablösekräften auf eine Empfängerfolie, welche bevorzugt eine Empfängertransferfolie ist, aufgebracht werden können, deren Empfängertransferlagen geringe Ablösekräfte aufweisen, ohne dass die Empfängertransferlage von der Empfängerträgerlage abgelöst wird bzw. abgelöst ist und/oder eine gewünschte Funktion im Folienzwischenprodukt verloren geht, beispielsweise die Funktion einer Delaminierungslage.

Vorteilhafterweise kann bei einer geringeren mittleren Ablösekraft der Empfängerablöseschicht verglichen mit der Spenderablöseschicht durch die Anpassung des Abzugswinkels der Spenderträgerlage und/oder das Einbringen von Leerstellen, Durchtrennungen und/oder Ausnehmungen in eine Spenderfolie die Ablösekraft der Spenderablöseschicht so verringert werden, dass dennoch nur die Spenderträgerlage abgelöst wird.

Vorteilhafterweise wird das Ablöseverhalten durch mechanische Trennhilfen, wie beispielsweise Blasleisten oder Trennschwerter, positiv beeinflusst. Beispielhaft muss beim Übertragen der Spendertransferlagen nicht nur auf allfällige Beschädigungen der Spender- und/oder Empfängertransferlagen geachtet werden, sondern der Übertrag soll auch in einer gewünschten Formgebung stattfinden. Insbesondere Fehlstellen sowie ungewollt überstehende und nicht angebundene Teile der Spendertransferlagen sind zu vermeiden. Vorteilhafterweise werden auch hierbei sowohl Trennhilfen als auch die oben beschriebenen Leerstellen, Durchtrennungen und Ausnehmungen in der Spenderfolie eingesetzt.

So ist es insbesondere möglich, dass bei einem Aufbringen der ein oder mehreren Folienelemente mittels mechanischer Trennhilfen, wie beispielsweise Blasleisten und/oder Trennhilfen, und mittels ein oder mehrerer Leerstellen, Durchtrennungen und/oder Ausnehmungen in zumindest einer der ein oder mehreren Spenderfolien eine gewünschte Formgebung der Folienelemente gewährleistet wird und Beschädigungen der Folienelemente und der Empfängerfolie, insbesondere der Empfängertransferlage, vermieden werden.

Insbesondere ist die Ablösekraft der Spenderträgerlage von der Spendertransferlage im Bereich von 0,3 cN pro cm Streifenbreite bis 50 cN pro cm Streifenbreite liegt, bevorzugt von 0,3 cN pro cm Streifenbreite bis 15 cN pro cm Streifenbreite, insbesondere gemessen gemäß FINAT-Methode FTM 2. Weiter ist die Ablösekraft der Empfängerträgerlage von der Empfängertransferlage im Bereich von 0,3 cN pro cm Streifenbreite bis 75 cN pro cm Streifenbreite liegt, bevorzugt von 1,5 cN pro cm Streifenbreite bis 50 cN pro cm Streifenbreite, insbesondere gemessen gemäß FINAT-Methode FTM 2.

Vorzugsweise weist die Empfängerfolie eine Empfängerkleberschicht auf. Insbesondere ist die Empfängerkleberschicht auf der der ein oder mehreren Spenderfolien in Schritt c) zugewandten Seite angeordnet. Weiter ist es möglich, dass die ein oder mehreren Spenderfolien auf der der Empfängerfolie in Schritt c) zugewandten Seite jeweils eine Spenderkleberschicht aufweist bzw. aufweisen.

Die Empfänger- und/oder Spenderkleberschicht weist insbesondere eine Schichtdicke von 0,1 µm bis 20 µm, bevorzugt eine Schichtdicke von 0,2 µm bis 12 µm, und insbesondere bevorzugt eine Schichtdicke von 0,2 µm bis 2 µm auf.

Vorzugsweise weist die Empfängerfolie eine Empfängerhaftvermittlerschicht auf. Insbesondere ist die Empfängerhaftvermittlerschicht auf der der ein oder mehreren Spenderfolien in Schritt c) zugewandten Seite angeordnet.

Weiter ist es möglich, dass die ein oder mehreren Spenderfolien auf der der Empfängerfolie in Schritt c) zugewandten Seite jeweils eine Spenderhaftvermittlerschicht aufweist bzw. aufweisen.

Die Empfänger- und/oder Spenderhaftvermittlerschicht weist insbesondere eine Schichtdicke von 0,01 µm bis 5 µm, bevorzugt eine Schichtdicke von 0,02 µm bis 2 µm, auf.

Eine solche Haftvermittlerschicht verbessert vorzugsweise die Anbindung einer Kleberschicht, welche beispielsweise auf der Spenderfolie, respektive Empfängerfolie aufgebracht wurde. Beim Aufschmelzen der Kleberschicht beim Heißprägen oder beim Vernetzen beim Kaltprägen sichert die Haftvermittlerschicht bevorzugt eine gute Anbindung, muss jedoch selber nicht als Kleber wirken.

Die Gesamtdicke der Schichten, welche vorzugsweise zwischen den zwei Reflexions- oder Farbschichten der Empfänger- und Spenderfolie vorliegen, beträgt bevorzugt weniger als 10 µm und insbesondere weniger als 5 µm, besonders bevorzugt weniger als 3 µm.

So ist es insbesondere möglich, dass der Abstand zwischen einer Reflexionsschicht oder einer Lackschicht der ein oder mehreren Folienelemente und einer Reflexionsschicht oder einer Lackschicht der Empfängerfolie und/oder der Abstand zwischen Reflexionsschichten und/oder Lackschichten mehrerer Folienelemente untereinander nach dem Aufbringen in Schritt c) weniger als 10 µm beträgt, insbesondere weniger als 5 µm beträgt, besonders bevorzugt weniger als 3 µm beträgt.

Es hat sich als vorteilhaft erwiesen, dass eine weitere Kleberschicht auf ein Zielsubstrat, auf die Empfängerfolie und/oder auf die ein oder mehreren Spenderfolien und/oder die jeweilige Spendertransferlage aufgebracht, bevorzugt appliziert, wird, insbesondere wobei die weitere Kleberschicht nach dem Schritt c), zur Verbindung des Folienzwischenprodukt mit einem Zielsubstrat verwendet wird, wobei die weitere Kleberschicht einschichtig oder mehrschichtig ist.

Die weitere Kleberschicht weist insbesondere eine Schichtdicke von 0,1 µm bis 20 µm, bevorzugt eine Schichtdicke von 0,2 µm bis 12 µm, auf.

Die weitere Kleberschicht, Empfängerkleberschicht und/oder Spenderkleberschicht sind vorzugsweise jeweils eine Heißsiegelkleberschicht, welche mittels Druck und Wärme aktiviert wird bzw. werden. Bevorzugt sind die weitere Kleberschicht, Empfängerkleberschicht und Spenderkleberschicht jeweils eine Heißsiegelkleberschicht.

Weiter ist es möglich, dass die weitere Kleberschicht als Kleberschicht einer Assistenzschicht und/oder einer Spenderablöseschicht der ein oder mehreren Spenderfolien, aufgebracht, bevorzugt appliziert, wird. Hierdurch ergibt sich der insbesondere Vorteil, dass nach dem Aufbringen der Folienelemente kein weiterer Schritt zur Applikation einer Kleberschicht durchgeführt werden muss und/oder dass bereits Dickenunterschiede durch eine Kleberschicht ausgeglichen werden können.

Ferner ist es möglich, dass nach dem Schritt c) eine weitere Kleberschicht, insbesondere eine PSA-Kleberschicht, auf einen Träger, insbesondere einen silikonisierten Träger, auf ein oder mehrere der Folienelemente der ein oder mehreren Spenderfolien aufgebracht, bevorzugt appliziert, wird. Unter einer PSA-Kleberschicht wird vorzugsweise eine Kleberschicht verstanden, welche drucksensitiv ist (PSA = pressure sensitive adhesive).

Die Dicke einer PSA-Kleberschicht liegt vorzugsweise im Bereich von 4 µm bis 100 µm, bevorzugt im Bereich von 8 µm bis 50 µm.

Weiter ist es möglich, dass die weitere Kleberschicht auf die Empfängerfolie oder Teilbereiche der Empfängerfolie aufgebracht, bevorzugt appliziert, wird.

Vorzugsweise wird die Empfängerfolie mit den aufgebrachten Folienelementen mittels der weiteren Kleberschicht auf den Träger kaschiert und optional die Empfängerfolie gestanzt und entgittert.

Als vorteilhaft hat sich erwiesen, dass nach dem Schritt c), insbesondere zur Verbindung des Folienzwischenprodukts mit dem Zielsubstrat, eine Erweichung und/oder Aktivierung der weiteren Kleberschicht durchgeführt wird, wobei die Spenderkleberschicht und/oder die Empfängerkleberschicht nicht erweicht wird.

Ferner ist es möglich, dass dabei die Spenderkleberschicht und/oder die Empfängerkleberschicht nur teilweise erweicht wird, wobei insbesondere bei der Erweichung der Spenderkleberschicht und/oder der Empfängerkleberschicht Funktionen und/oder optische Effekte des Folienzwischenprodukts nur gering beeinflusst werden, bevorzugt nicht negativ beeinflusst werden.

Vorteilhafterweise beeinflusst die Erweichung der Spenderkleberschicht und/oder der Empfängerkleberschicht die Ablösekraft der Spenderkleberschicht und/oder der Empfängerkleberschicht nur gering oder nicht, so dass die Haftung zwischen den Schichten der ein oder mehreren Folienelementen, den Spendertransferlagen, der Empfängertransferlage und/oder der Empfängerfolie bestehen bleibt.

Hierbei werden unter Funktionen und/oder optischen Effekten des Folienzwischenprodukts insbesondere Funktionen und Effekte einer Dekorlage, funktionellen Lage, Delaminierungslage und/oder Assistenzschicht verstanden.

Vorzugsweise unterscheidet sich die Erweichungstemperatur der Spenderkleberschicht und der Empfängerkleberschicht, und/oder die Erweichungstemperatur der Spenderkleberschicht und/oder die Erweichungstemperatur der Empfängerkleberschicht unterscheidet sich von der Erweichungstemperatur der weiteren Kleberschicht.

Es hat sich als vorteilhaft erwiesen, dass die Erweichungstemperatur der Spenderkleberschicht die Erweichungstemperatur der Empfängerkleberschicht um mindestens 2,5°C unterschreitet, insbesondere um mindestens 5°C unterschreitet, bevorzugt um mindestens 7,5°C unterschreitet.

Weiter hat sich als vorteilhaft erwiesen, dass die Erweichungstemperatur der weiteren Kleberschicht die Erweichungstemperatur der Spenderkleberschicht und/oder der Empfängerkleberschicht um mindestens 2,5°C unterschreitet, insbesondere um mindestens 5°C unterschreitet, bevorzugt um mindestens 7,5°C unterschreitet.

Ferner hat sich als zweckmäßig erwiesen, dass eine Erweichung der weiteren Kleberschicht durchgeführt wird, wobei die Temperatur der Spenderkleberschicht und/oder der Empfängerkleberschicht um mindestens 2,5°C geringer ist, insbesondere um mindestens 5°C geringer ist, bevorzugt um mindestens 7,5°C geringer ist als die Erweichungstemperatur einer der ein oder mehreren Spenderkleberschichten und/oder der Empfängerkleberschicht.

Weiter ist es möglich, dass die Spenderkleberschicht, insbesondere nach dem Schritt c), chemisch und/oder durch Strahlung vernetzt wird und/oder dass die Erweichungstemperatur der Spenderkleberschicht und/oder Empfängerkleberschicht nach Schritt c) erhöht wird.

Insbesondere wird die Erweichung der ein oder mehreren Spenderkleberschichten und/oder der Empfängerkleberschicht durchgeführt, wobei keine Erweichung der Empfängerablöseschicht stattfindet und/oder die Haftung zwischen Empfängertransferlage und Empfängerträgerlage durch die Empfängerablöseschicht erhalten bleibt.

Vorzugsweise werden in Schritt c) zwei oder mehrere der Folienelemente derart aufgebracht, dass sie sich teilweise überlappen, vollständig überlappen und/oder nicht überlappen.

Somit ergibt sich insbesondere der Vorteil, dass Merkmale von Folienelementen im Folienzwischenprodukt und/oder in einem Endprodukt näher aneinander angeordnet werden können, als dies bei einer Herstellung auf derselben Folie möglich wäre.

Vorteilhafterweise werden Positionierungstoleranzen unterschiedlicher Merkmale, welche mit den Folienelementen auf die Empfängerfolie aufgebracht werden und/oder auf der Empfängerfolie angeordnet sind, verringert. So ist es insbesondere möglich die Registergenauigkeit, beispielsweise von Folienelementen untereinander und/oder eines oder mehrerer Folienelemente zur Empfängerfolie, zu verbessern.

Dies insbesondere verglichen mit einer Herstellung von folienbasierten Sicherheitsmerkmalen, wobei die Herstellung in größeren Bahnbreiten der Empfängerfolie und/oder der Spenderfolien erfolgt, beispielsweise in Bahnbreiten zwischen 500 mm und 2000 mm. Da insbesondere Bearbeitungswerkzeuge, beispielsweise für eine Replikation oder ein Drucken, typischerweise starr sind, können diese nicht auf Verzüge einer Bahn reagieren. Beispielsweise beim registerhaltigen Zuführen von Einzelbahnen, insbesondere als Spenderfolien, können lokale Verzüge laufend besser ausgeglichen werden, insbesondere wenn anstelle nur einer Spenderfolie mehrere Spenderfolien verwendet werden und/oder die ein oder mehreren Spenderfolien schmaler sind als die Empfängerfolie.

So sind die ein oder mehreren Spenderfolien vorzugsweise schmaler als die Empfängerfolie und die Positionierung, insbesondere die Registergenauigkeit, jeder Spenderfolie einstellbar. Weiter ist es zweckmäßig, wenn mindestens zwei Spenderfolien als Einzelbahnen bereitgestellt werden, welche jeweils eine geringere Bahnbreite als die Empfängerfolie aufweisen.

Beispielsweise ist es auch möglich, dass die ein oder mehreren Folienelemente so auf die Empfängerfolie aufgebracht werden, dass sich in den bereitgestellten ein oder mehreren Spenderfolien und/oder in der bereitgestellten Empfängerfolie bereits entstandene Registerabweichungen positiv auf die noch zu erreichende Registergenauigkeit im Folienzwischenprodukt auswirken, indem beispielsweise ähnliche Abfolgen von Registerabweichungen, insbesondere in Laufrichtung, einer Spenderfolie und der Empfängerfolie kombiniert werden.

Insbesondere können Merkmale auf den Spenderfolien separat hergestellt und im Folienzwischenprodukt kombiniert werden, welche bei einer Herstellung auf nur einer Folie inkompatible Herstellungsprozesse bedeuten würden.

Es ist weiter möglich, dass in Schritt c) ein oder mehrere der Folienelemente derart aufgebracht werden, dass sie die Empfängerfolie lediglich bereichsweise überlappen.

Insbesondere werden in Schritt c) die ein oder mehreren Folienelemente derart aufgebracht, dass sie jeweils weniger als 5% der Fläche der Empfängerfolie überlappen. Hierdurch ergibt sich insbesondere der Vorteil, dass weniger Material durch den Prozess geführt wird und/oder weniger Ausschuss anfällt.

Hierdurch wird der Vorteil erzielt, dass zur Herstellung des Folienzwischenprodukts, insbesondere in Relation zur Fläche der jeweiligen Folienelemente, ein geringerer Ausschuss an Materialien der Spenderfolien entsteht. Durch das Aufbringen einer Spenderfolie beispielsweise mit einem komplex gedruckten Merkmal, vorzugsweise mit mehreren Druckschichten und/oder kostenintensiven Pigmenten und/oder mittels kostenintensiven Druckprozessen ist es beispielsweise möglich, auch sehr kostenintensive Prozesse zu verwenden und die damit hergestellten Merkmale in ein Sicherheitselement zu integrieren, da nicht die gesamte Fläche der Empfängerfolie mit dem kostenintensiven Prozess bearbeitet werden muss.

Zweckmäßigerweise bedeckt eine Spenderfolie in Draufsicht bzw. in Betrachtung senkrecht auf die jeweilige Spenderfolie und die jeweilige Empfängerfolie bei dem Aufbringen der jeweiligen Folienelemente lediglich eine Fläche von 0,2% bis 20%, bevorzugt eine Fläche von 0,5% bis 5% der Empfängerfolie.

Insbesondere können unterschiedliche Dekorlagen, funktionelle Lagen und/oder Delaminierungslagen in besonders geringem Abstand angeordnet werden, welcher bei Herstellung auf einer Folie nicht möglich ist und/oder nur mit höheren Kosten, mehr Ausschuss, schlechterer Fälschungssicherheit und/oder schlechterer Qualität hergestellt werden kann.

Beispielhaft weist ein Folienelement optische Effekte auf, welche eine sehr hohe Replikationsqualität aufweisen, wodurch hohe Temperaturen und ein hoher Druck bei der Fertigung notwendig sind. Dabei weist die Empfängerfolie und/oder ein weiteres Folienelement eine Delaminierungslage auf, die bei einer Fertigung des optischen Effekts auf derselben Folie durch den hohen Druck und die hohen Temperaturen Schaden nehmen würde.

Weiter ist es möglich, dass eine erste optisch aktive Oberflächenstruktur, insbesondere ein Oberflächenrelief, besonders nah an einer weiteren optisch aktiven Oberflächenstruktur, insbesondere einem weiteren Oberflächenrelief, vorgesehen ist.

Diese beiden Oberflächenstrukturen überlappen sich vorzugsweise, insbesondere bei Betrachtung senkrecht auf eine von der Empfängerträgerlageaufgespannte Ebene. Weiterhin ist es möglich, dass beide Oberflächenreliefs zumindest teilweise mit einer Reflexionsschicht, versehen sind, insbesondere mit einer metallischen Reflexionsschicht und/oder mit einer HRI-Schicht.

Hierbei ist es möglich, dass die weitere optisch aktive Oberflächenstruktur insbesondere in einem Ätzverfahren dazu eingesetzt wird, die Bestrahlung so zu manipulieren, dass registergenau zu der weiteren optisch aktiven Oberflächenstruktur eine Metallisierung bzw. Demetallisierung durchgeführt wird. Würde die erste optisch aktive Oberflächenstruktur bei der Bestrahlung beispielhaft zu nah an der weiteren optisch aktiven Oberflächenstruktur angeordnet sein, so würde diese die Bestrahlung negativ beeinflussen oder könnte nur eingeschränkte optische Effekte aufweisen.

Aufgrund des störenden Effekts der ersten optisch aktiven Oberflächenstruktur bei der Bestrahlung, ist es vorteilhaft diese in einem separaten Fertigungsschritt herzustellen und in einer anderen Spenderfolie und/oder in der Empfängerfolie bereitzustellen.

Vorzugsweise wird nach Schritt c), eine Vereinzelung, insbesondere durch Schneiden und/oder Stanzen, der Empfängerfolie mit den ein oder mehreren Folienelementen durchgeführt.

Es ist ferner möglich, dass die Empfängerfolie, ein oder mehrere der Folienelemente und/oder ein oder mehrere der Spenderfolien ein oder mehrere Assistenzschichten aufweist, welche insbesondere eine der folgenden oder eine Kombination der folgenden Schichten aufweist:
Ein oder mehrere Haftvermittlerschichten. Eine Haftvermittlerschicht erhöht insbesondere die Haftung einer Kleberschicht, welche zwischen einer oder mehreren Schichten und der Haftvermittlerschicht angeordnet ist, wobei die Haftung bevorzugt zwischen ein oder mehreren mit der Haftvermittlerschicht verbundenen und ein oder mehreren mit der Kleberschicht verbundenen Schichten hergestellt werden soll.

Vorzugsweise liegt die Dicke einer Haftvermittlerschicht im Bereich 0,01 µm bis 5 µm, bevorzugt 0,02 µm bis 2 µm.

Ein oder mehrere Ablöseschichten. Vorzugsweise ist eine Ablöseschicht derart gestaltet, dass eine zerstörungsfreie Trennung mehrerer über die Ablöseschicht in Verbindung stehender Schichten bei einer Aktivierung der Ablöseschicht herbeigeführt wird, bevorzugt durch thermische und/oder mechanische Aktivierung. Unter ablösbar ist bevorzugt zu verstehen, dass sich eine Verbindung trennen lässt, wobei keine und/oder nur die Ablöseschicht zerstört wird. Die Spenderträgerlage lässt sich demnach zerstörungsfrei von der Spendertransferlage trennen.

Ein oder mehrere Schutzschichten. Unter einer Schutzschicht ist insbesondere eine Schicht zu verstehen, welche anliegende Schichten vor äußeren Einwirkungen, insbesondere mechanischen und/oder thermischen und/oder chemischen Einwirkungen, schützt. Beispielsweise schützt eine Schutzschicht anliegende Schichten vor Abrieb und/oder Oxidation. Eine Schutzschicht kann beispielsweise eine Lackschicht aufweisen.

Ein oder mehrere Druckannahmeschichten. Unter einer Druckannahmeschicht ist insbesondere eine Schicht zu verstehen, welche die Haftung und/oder die Qualität einer darauf angeordneten Druckschicht verbessert. Druckannahmeschichten weisen dafür beispielsweise eine speziell ausgebildete Porosität und/oder Rauigkeit und/oder Oberflächenenergie auf.

Eine Assistenzschicht weist insbesondere eine Schichtdicke zwischen 0,01 µm und 20 µm auf. Vorzugsweise werden diese Schichten partiell oder vollflächig mittels eines Druckverfahrens aus einer Lösung aufgebracht. Es ist auch möglich, dass eine Assistenzschicht mittels Sprühen, Gießen oder Spritzgießen aufgebracht ist bzw. wird. Weiterhin ist es denkbar, dass eine Assistenzschicht strahlengehärtet ist, beispielsweise mittels UV-Strahlung und/oder Elektronenstrahlung.

Es hat sich als vorteilhaft erwiesen, dass die Dekorlage der Empfängerfolie mindestens ein erstes Dekorelement aufweist. Vorzugsweise weist die Dekorlage der Empfängerfolie eine Vielzahl von ersten Dekorelementen auf, welche insbesondere in einem regelmäßigen ein- oder zweidimensionalen Raster in der Dekorlage vorgesehen sind.

Weiter ist es möglich, dass die ein oder mehreren Folienelemente jeweils ein oder mehrere zweite Dekorelemente aufweisen oder jeweils ein zweites Dekorelement ausbilden, wobei die ersten und zweiten Dekorelemente sich voneinander unterscheiden. Insbesondere sind jeweils ein erstes und ein zweites Dekorelement benachbart zueinander angeordnet.

Es hat sich als vorteilhaft erwiesen, dass eine Kleberschicht zur Verbindung des Folienzwischenprodukts mit einem Zielsubstrat dient, vorzugsweise als Ausgleichsschicht dient, insbesondere dass diese Kleberschicht bei einem Verbinden des Folienzwischenprodukts mit dem Zielsubstrat fließt, wobei insbesondere die Form der Oberfläche dieser Kleberschicht egalisiert wird. Unter egalisiert ist hier insbesondere zu verstehen, dass die Form der Oberfläche dieser Kleberschicht an die Form des Zielsubstrats angepasst wird.

Eine Ausgleichsschicht dient insbesondere zur Kaschierung von Dickenunterschieden einer Folie. Weiter ist eine Ausgleichsschicht bei einer Applikation des Folienzwischenprodukts auf ein Zielsubstrat vorteilhafterweise zur Reduktion von Druck- und/oder Spannungsspitzen und/oder zur Vermeidung eines ungewollten Fließens und/oder eines Reißens anderer Schichten der Folie vorgesehen.

Vorzugsweise ist vorgesehen, dass das Folienzwischenprodukt zur Herstellung einer Oberfläche des Produkts verwendet wird. Insbesondere wird das Folienzwischenprodukt auf ein Zielsubstrat appliziert.

Es ist ferner möglich, dass die Empfängerträgerlage von der Empfängertransferlage abgelöst wird nachdem das Folienzwischenprodukt auf das Zielsubstrat appliziert wird, insbesondere wobei die Empfängertransferlage an der dadurch freigelegten Oberfläche ein Oberflächenrelief aufweist.

Weiter ist es möglich, dass das Folienzwischenprodukt durch Einspritzen einer Spritzgussmasse auf das Zielsubstrat appliziert wird, insbesondere wobei die Spritzgussmasse das Zielsubstrat ausbildet.

Es hat sich als vorteilhaft erwiesen, wenn die Empfängerfolie hierbei eine ablösbare Empfängerträgerlage aufweist, bevorzugt aufweisend einen Polyesterträger.

Insbesondere bildet eine der jeweiligen Spenderträgerlage einer Spendertransferfolie vor dem Aufbringen in Schritt c) abgewandte Seite eine im Produkt dem Zielsubstrat abgewandte Seite. Vorzugsweise bildet diese Seite eine für einen Betrachter sichtbare Oberfläche des Produkts.

Es ist weiter möglich, dass eine dem Zielsubstrat abgewandte Seite des Folienzwischenprodukts eine Seite einer Spendertransferfolie bildet, welche vor dem Aufbringen in Schritt c) der Spenderträgerlage abgewandt bereitgestellt wird. Insbesondere ist dies eine Seite einer Metallschicht, wobei die Metallschicht auf der dem Zielsubstrat abgewandten Seite andere Eigenschaften aufweist als auf der dem Zielsubstrat zugewandten Seite. Bevorzugt weist diese Metallschicht auf der dem Zielsubstrat abgewandten Seite eine weitere Schicht auf, welche durch eine Demetallisierung mittels Ätzverfahren exakt im Register zu der Metallschicht angeordnet ist. Diese weitere Schicht ist insbesondere eine Einfärbung der Metallschicht durch eine bei dem Ätzverfahren als Ätzresist verwendete Schicht. Hierbei ist es möglich, dass die als Ätzresist verwendete Schicht beispielsweise eine farbige Lackschicht ist. Zweckmäßigerweise ist die farbige Lackschicht transparent und/oder semitransparent. So ist es insbesondere möglich, dass die Metallschicht für einen Betrachter des Produkts, bevorzugt mit Blick durch die farbige Lackschicht auf die Metallschicht, eine Einfärbung aufweist.

Im Folgenden wird die Erfindung anhand von mehreren Ausführungsbeispielen unter Zuhilfenahme der beiliegenden Zeichnungen beispielhaft erläutert.
Fig. 1a zeigt eine schematische Schnittdarstellung von Spenderfolien.
Fig. 1b zeigt eine schematische Schnittdarstellung einer Empfängerfolie.
Fig. 1c zeigt eine schematische Schnittdarstellung eines Folienzwischenprodukts.
Fig. 2a zeigt eine schematische Schnittdarstellung einer Empfängerfolie.
Fig. 2b zeigt eine schematische Schnittdarstellung einer Spenderfolie.
Fig. 3a zeigt eine schematische Schnittdarstellung einer Spenderfolie.
Fig. 3b zeigt eine schematische Schnittdarstellung einer Empfängerfolie.
Fig. 3c zeigt eine schematische Schnittdarstellung einer Spenderfolie.
Fig. 3d zeigt eine schematische Schnittdarstellung einer ablösbaren Spenderträgerlage einer auf eine Empfängerfolie applizierten Spenderfolie.
Fig. 3e zeigt eine schematische Schnittdarstellung einer Spendertransferfolie.
Fig. 3f zeigt eine schematische Ansicht von Unten der in Fig. 3e gezeigten Folie.
Fig. 4a zeigt eine schematische Schnittdarstellung einer Spenderfolie.
Fig. 4b zeigt eine schematische Schnittdarstellung einer Empfängerfolie.
Fig. 5 zeigt eine schematische Schnittdarstellung einer Spendertransferlage auf einer Empfängerfolie.
Fig. 6 zeigt eine schematische Schnittdarstellung eines Folienzwischenprodukts.
Fig. 7 zeigt eine schematische Schnittdarstellung eines Folienzwischenprodukts.
Fig. 8 zeigt eine schematische Schnittdarstellung eines Folienzwischenprodukts.
Fig. 9a zeigt eine schematische Schnittdarstellung eines Folienzwischenprodukts.
Fig. 9b zeigt eine Ansicht von Unten eines Folienzwischenprodukts.
Fig. 10a zeigt eine Draufsicht eines Bereitstellens einer Empfängerfolie.
Fig. 10b zeigt ein Aufbringen von Folienelementen auf eine Empfängerfolie.
Fig. 10c zeigt das Bereitstellen ein oder mehrerer Spenderfolien.
Fig. 10d zeigt das Bereitstellen einer Empfängerfolie und Spenderfolien.
Fig. 10e zeigt ein Folienzwischenprodukt.
Fig. 11a zeigt ein Folienzwischenprodukt.
Fig. 11b zeigt ein Folienzwischenprodukt.
Fig. 11c zeigt ein Folienzwischenprodukt.
Fig. 11d zeigt ein Folienzwischenprodukt.
Fig. 12a zeigt eine Empfängerfolie.
Fig. 12b zeigt einen Merkmalsbereich mit Dekorelementen.
Fig. 13a zeigt ein Folienzwischenprodukt appliziert auf ein Zielsubstrat.

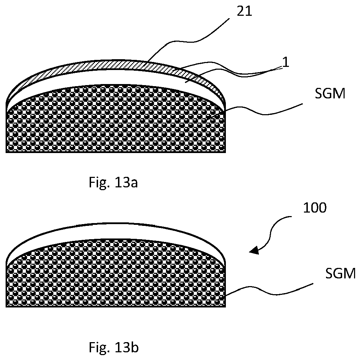

Fig. 13a zeigt ein Folienzwischenprodukt appliziert auf ein Zielsubstrat.

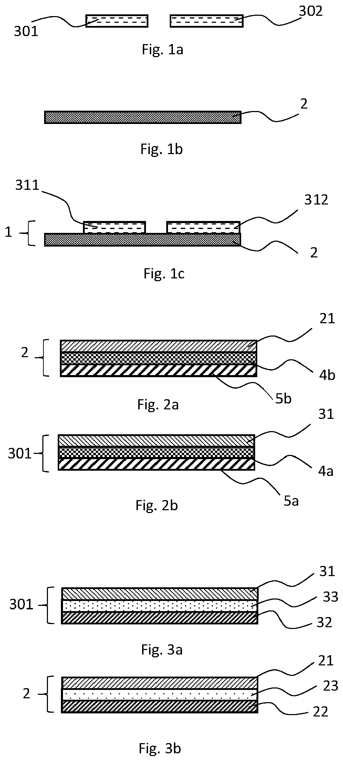

Fig. 1a zeigt zwei Spenderfolien 301, 302. Hierbei ist es möglich, dass mindestens eine der Spenderfolien 301, 302 eine Spendertransferfolie ist, bevorzugt eine Heißpräge-, Kaltpräge-, und/oder eine Thermotransferfolie ist, und/oder eine Spenderlaminierfolie ist. Es ist weiter möglich, dass die Spenderfolien 301, 302 gleichartig und/oder voneinander unterschiedlich ausgestaltet sind.

Bevorzugt ist es möglich, dass die Spenderfolien 301, 302, jeweils ein oder mehrere Assistenzschichten 11a, mindestens eine Dekorlage 4a, eine Delaminierungslage und/oder mindestens eine funktionelle Lage 5a umfassen.

Fig. 1b zeigt eine Empfängerfolie 2. Hierbei ist es möglich, dass die Empfängerfolie eine Empfängertransferfolie ist, bevorzugt eine Heißprägefolie oder Kaltprägefolie oder Thermotransferfolie, oder dass die Empfängerfolie 2 eine Empfängerlaminierfolie ist.

Es ist möglich, dass die Empfängerfolie 2 eine Empfängerträgerlage 21, eine Dekorlage 4b, eine Delaminierungslage und/oder eine funktionelle Lage 5b umfasst.

Eine Dekorlage 4a, 4b weist jeweils eine der folgenden oder eine Kombination der folgenden Schichten, insbesondere jeweils vollflächig und/oder teilflächig, auf: ein oder mehrere Lackschichten, ein oder mehrere Schichten enthaltend ein Flüssigkristallmaterial, ein oder mehrere Schichten enthaltend ein Dünnfilmsystem, ein oder mehrere metallische Schichten, ein oder mehrere Volumenhologrammschichten, ein oder mehrere Schichten aufweisend eine optisch aktive Oberflächenstruktur oder ein optisch aktives Oberflächenrelief, ein oder mehrere Reflexionsschichten 10a, 10b.

Weiter ist es möglich, dass die Empfängerfolie 2 ein oder mehrere Assistenzschichten 11b aufweist. Eine Assistenzschicht 11a, 11b weist insbesondere eine der folgenden oder eine Kombination der folgenden Schichten auf:
Ein oder mehrere Haftvermittlerschichten, ein oder mehrere Ablöseschichten, ein oder mehrere Schutzschichten und/oder ein oder mehrere Druckannahmeschichten.

Fig. 1c zeigt beispielhaft ein Folienzwischenprodukt 1 umfassend die in Fig. 1b abgebildete Empfängerfolie 2 und zwei Folienelemente 311, 312, welche jeweils von einem Ausschnitt der in Fig. 1a abgebildeten Spenderfolien 301, 302 gebildet werden und welche auf die Empfängerfolie 2 aufgebracht sind.

Fig. 1a bis Fig. 1c zeigen somit ein Verfahren zur Herstellung eines Folienzwischenprodukts 1. Fig. 1b zeigt den Schritt a), ein Bereitstellen einer Empfängerfolie 2. Fig. 1a zeigt den Schritt b), ein Bereitstellen ein oder mehrerer Spenderfolien, wobei hier insbesondere zwei Spenderfolien 301, 302 bereitgestellt werden. Fig. 1c zeigt das Aufbringen ein oder mehrerer Folienelemente, welches bzw. welche jeweils von einem Ausschnitt einer der ein oder mehreren Spenderfolien gebildet wird bzw. werden, auf die Empfängerfolie 2 aus Fig. 1 a, wobei hier insbesondere die Folienelemente 311, 312 jeweils von einem Ausschnitt der Spenderfolien 301, 302 gebildet werden.

Hierbei können die Schritte insbesondere einfach und/oder mehrfach in beliebiger Reihenfolge, bevorzugt in der oben genannten Reihenfolge, durchgeführt werden.

Es ist somit möglich, dass ein Folienelement 311, 312 von einem Ausschnitt einer Spendertransferfolie, insbesondere einem Ausschnitt einer Heißprägefolie, einer Kaltprägefolie und/oder einer Thermotransferfolie, gebildet wird. Weiter ist es auch möglich, dass ein Folienelement 311, 312 von einem Ausschnitt einer Spenderlaminierfolie gebildet wird.

Insbesondere ist es möglich, dass der ein jeweiliges Folienelement 311, 312 bildende Ausschnitt einer Spenderfolie die gesamte Spenderfolie 301, 302 oder lediglich einen Teil und/oder mehrere Teile einer Spenderfolie 301, 302 umfasst.

Bevorzugt weist das Folienzwischenprodukt 1 in Betrachtung senkrecht auf eine von dem Folienzwischenprodukt aufgespannte Ebene, bevorzugt in Draufsicht ausgehend von der hier gezeigten Schnittdarstellung, mindestens zwei, bevorzugt unterschiedliche, direkt aneinander angrenzende, zumindest teilweise überlappende und/oder benachbarte Folienelemente auf, welche bei einer Fertigung auf einer Folie inkompatibel wären und/oder zumindest eine Erhöhung der Fertigungszeit, Verringerung der Qualität der Merkmale und/oder einen höheren Ausschuss und/oder höhere Herstellkosten bedeuten würden.

Fig. 2a zeigt eine Empfängerfolie 2, welche eine Empfängerträgerlage 21, eine Dekorlage 4b und eine funktionelle Lage 5b umfasst. Die Empfängerträgerlage 21 besteht vorzugsweise aus PET, BOPP, PEN, PMMA, PC, ABS, PU, PVC und/oder Glas, und weist insbesondere eine Schichtdicke von 5 µm bis 150 µm, bevorzugt 10 µm bis 75 µm auf.

Die Dekorlage 4b ist hier beispielhaft zwischen der Empfängerträgerlage 21 und der funktionellen Lage 5b angeordnet. Es ist auch möglich, dass die funktionelle Lage 5b zwischen der Dekorlage 4b und der Empfängerträgerlage 21 angeordnet ist.

Weiter ist es möglich, dass die Empfängerfolie 2 mindestens eine Delaminierungslage 18 und/oder mindestens eine Assistenzschicht 11b aufweist.

Bezüglich der Ausgestaltung der Lagen bzw. Schichten, sowie weiterer Lagen bzw. Schichten ist auf obige Ausführungen verwiesen.

Fig. 2b zeigt eine Spenderfolie 3, welche eine Spenderträgerlage 31, eine Dekorlage 4a und eine funktionelle Lage 5a umfasst. Die Spenderträgerlage 31 besteht vorzugsweise aus PET, BOPP, PEN, PMMA, PC, ABS, PU, PVC und/oder Glas, und weist insbesondere eine Schichtdicke von 5 µm bis 150 µm, bevorzugt 5 µm bis 75 µm, weiter bevorzugt 5 µm bis 50 µm auf.

Die Dekorlage 4a ist hier beispielhaft zwischen der Spenderträgerlage 31 und der funktionellen Lage 5a angeordnet. Es ist auch möglich, dass die funktionelle Lage 5a zwischen der Dekorlage 4a und der Spenderträgerlage 31 angeordnet ist.

Weiter ist es möglich, dass die Spenderfolie 301 mindestens eine Delaminierungslage 18 und/oder mindestens eine Assistenzschicht 11b aufweist.

Somit ist es weiter möglich, dass die jeweils von einem Ausschnitt einer der ein oder mehreren Spenderfolien 301 gebildeten ein oder mehreren Folienelemente 311 bis 314 mindestens eine Dekorlage 4a und/oder mindestens eine funktionelle Lage 5a und/oder eine Delaminierungslage 18 aufweisen.

Bezüglich der spezifischen Ausgestaltung der Lagen bzw. Schichten, sowie weiterer Lagen bzw. Schichten ist insbesondere auf obige Ausführungen verwiesen.

Fig. 3a zeigt eine Spenderfolie 301 umfassend eine Spenderträgerlage 31, eine Spendertransferlage 32 und eine Spenderablöseschicht 33.

Die Spenderablöseschicht 33 ist vorzugsweise zwischen der Spenderträgerlage 31 und weiteren Schichten der Spenderfolie 301 angeordnet.

Hierbei umfasst die Spendertransferlage 32 vorzugsweise eine oder mehrere der oben beschriebenen Assistenzschichten 11a, Dekorlagen 4a, funktionellen Lagen 5a und/oder Delaminierungslagen 18.

Die Spenderablöseschicht 33 weist die Eigenschaften einer Ablöseschicht auf. Eine Ablöseschicht umfasst insbesondere eine oder mehrere Wachsschichten. Weiter weist eine Ablöseschicht bevorzugt eine Kleberschicht auf. Insbesondere ist die Spenderträgerlage 31 durch die Spenderablöseschicht 33 von der Spendertransferlage 32 ablösbar.

Die Spenderträgerlage 31 lässt sich insbesondere zerstörungsfrei von der Spendertransferlage 32 trennen. Weiter ist es möglich, dass beim Ablösen eine Formgebung eines mittels der Spendertransferlage 32 übertragenen Folienelements 311, 312 stattfindet.

Bezüglich der spezifischen Ausgestaltung der Lagen bzw. Schichten, sowie weiterer Lagen bzw. Schichten ist insbesondere auf obige Ausführungen verwiesen.

Fig. 3b zeigt eine Empfängerfolie 2 umfassend eine Empfängerträgerlage 21, eine Empfängertransferlage 22 und/oder eine Empfängerablöseschicht 23.

Die Empfängerablöseschicht 23 ist vorzugsweise zwischen der Empfängerträgerlage 21 und weiteren Schichten der Empfängerfolie 2 angeordnet.

Hierbei umfasst die Empfängertransferlage 22 vorzugsweise eine oder mehrere der oben beschriebenen Assistenzschichten 11a, Dekorlagen 4b, funktionellen Lagen 5b und/oder Delaminierungslagen 18.

Weiter ist es möglich, dass die Empfängertransferlage 22 eine transparente Schicht aufweist, insbesondere eine mindestens in einem Teilbereich im UV-Bereich mit einer Wellenlänge von 400 nm bis 240 nm und/oder für das menschliche Auge transparente Schicht und/oder eine Farbschicht, welche bevorzugt aufgedruckt ist, aufweist.

Bezüglich der Ausgestaltung der Empfängerablöseschicht 23 ist auf die obige Ausführung einer Ablöseschicht verwiesen.

Insbesondere ist die Empfängerträgerlage 21 durch die Empfängerablöseschicht 23 von der Empfängertransferlage 22 ablösbar. Die Empfängerträgerlage 21 lässt sich demnach zerstörungsfrei von der Empfängertransferlage 22 trennen.

Weiter ist es insbesondere möglich, dass beim Ablösen der Empfängertransferlage 22 von der Empfängerträgerlage 21 eine Formgebung der Empfängertransferlage 22 stattfindet.

Bezüglich der spezifischen Ausgestaltung der Lagen bzw. Schichten, sowie weiterer Lagen bzw. Schichten ist insbesondere auf obige Ausführungen verwiesen.

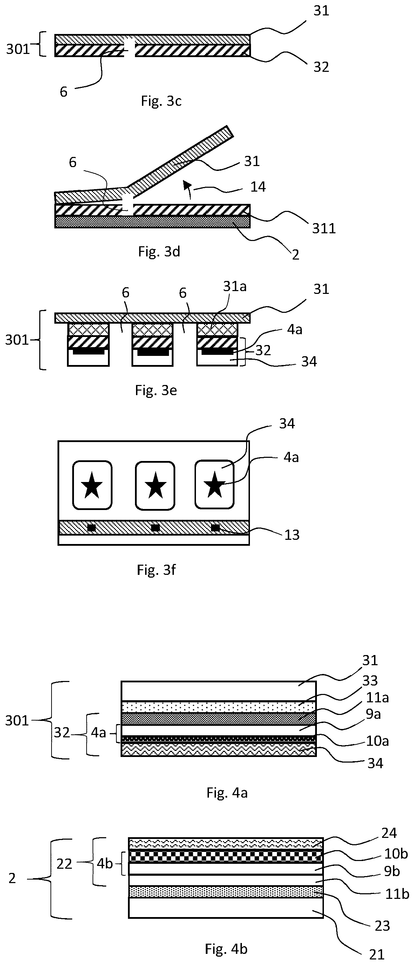

Fig. 3c zeigt eine Spenderfolie 301 mit einer Spendertransferlage 32 und einer Spenderträgerlage 31. Hierbei weist die Spenderfolie 301 bzw. die Spenderträgerlage 31 eine Ausnehmung 6 auf, welche durch die Spendertransferlage 32 und teils in die Spenderträgerlage 31 eingebracht ist.

Vorzugsweise weist die Spenderfolie 301 anstelle der Ausnehmung 6 eine Leerstelle und/oder eine vollständige und/oder teilweise Durchtrennung 7a der Spenderträgerlage 31 und/oder der Spendertransferlage 32 auf und/oder weist zusätzliche Durchtrennungen 7a und/oder Ausnehmungen 6 der Spenderträgerlage 31 und/oder der Spendertransferlage 32 auf.

Bezüglich der Ausgestaltung der Lagen bzw. Schichten, sowie weiterer Lagen bzw. Schichten ist auf obige Ausführungen verwiesen.

Fig. 3d zeigt eine Spenderfolie 301, welche in Fig. 3c beschrieben wurde. In dem hier gezeigten Ausführungsbeispiel ist die Spenderfolie 301 eine Spendertransferfolie und die Spendertransferlage 32 ist von der Spenderträgerlage 31 ablösbar.

Hierbei weist die Spenderfolie 301 bzw. die Spenderträgerlage 31 eine optionale Ausnehmung 6 auf, welche in die Spendertransferlage 32 und teils in die Spenderträgerlage 31 eingebracht ist.

Es ist ebenso möglich, dass keine Ausnehmungen 6 vorgesehen sind und/oder anstelle der Ausnehmungen 6 Durchtrennungen 7a und/oder Leerstellen vorgesehen sind.

Weiter ist die Spenderfolie 301 hier beispielhaft mit einer Empfängerfolie 2 verbunden. Bevorzugt wird die Spenderträgerlage 31 von der Spendertransferlage 32 zumindest bereichsweises abgelöst, wodurch insbesondere ein erster Teilbereich der Spendertransferlage 32 als Folienelement 311 auf der Empfängerfolie verbleibt.

Vorzugsweise ist die Spenderfolie 301 eine Spendertransferfolie, welche insbesondere eine Heißprägefolie ist, und die Empfängerfolie 2 ist eine Empfängertransferfolie, welche insbesondere eine Heißprägefolie ist.

Bevorzugt werden weitere Folienelemente gebildet aus Ausschnitten der Spenderfolie 301, welche eine Spendertransferfolie ist, und/oder aus weiteren ein oder mehreren Spenderfolien 302, 303, 304.

Zur Einstellung des Abzugswinkels 14 werden vorzugsweise Rollen verwendet. Insbesondere hat sich das Abziehen der Spenderfolie 301 über eine Kante bewährt. Besonders vorteilhaft sind insbesondere sehr spitz zulaufende Kanten, bevorzugt mit einem kleinen Winkel zwischen den Flächen, da sie beispielsweise einen eng lokalisierten Abzugsort mit einem großen Abzugswinkel, bevorzugt bis zu 180° erlauben. Für ein randscharfes Aufbrechen der Spendertransferlagen 32 werden bevorzugt mechanische Trennhilfen verwendet.

Insbesondere sind Ausnehmungen 6, Durchtrennungen 7a, 7b und/oder Leerstellen vorgesehen und/oder es wird ein Abzugswinkel 14 zwischen 30° und 180°, bevorzugt 90° und 180° eingestellt.

Hierdurch wird insbesondere eine geringere Ablösekraft zum Ablösen der Spenderträgerlage 31 von der auf der Empfängerfolie 2 aufgebrachten Spendertransferlage 32 erzielt als ohne Ausnehmungen 6, Durchtrennungen 7a, 7b und/oder Leerstellen und/oder unter abweichenden Abzugswinkeln. Dadurch werden insbesondere relativ geringe thermische und/oder mechanische Belastungen auf die Spendertransferlagen 32 und/oder die Empfängerfolie 2, welche vorzugsweise eine Empfängertransferfolie ist, bevorzugt eine Heißprägefolie ist, realisiert.

Dies gilt insbesondere bei einem Heißprägen ein oder mehrerer Spenderfolien 301 bis 304 als Heißprägefolien auf eine Empfängerfolie 2 als Heißprägefolie.

Durch eine geeignete Prozessführung, insbesondere bei einem Kaltprägen und/oder Heißprägen, in Schritt c), hat sich überraschenderweise gezeigt, dass selbst Spendertransferlagen 32 mit relativ hohen Ablösekräften auf eine Empfängerfolie 2, welche bevorzugt eine Empfängertransferfolie ist, aufgebracht werden können, deren Empfängertransferlagen geringe Ablösekräfte aufweisen, ohne dass die Empfängertransferlage 22 von der Empfängerträgerlage 21 abgelöst wird bzw. abgelöst ist und/oder eine gewünschte Funktion im Folienzwischenprodukt 1 verloren geht, beispielsweise die Funktion einer Delaminierungslage.

Bezüglich der spezifischen Ausgestaltung der Lagen bzw. Schichten, sowie weiterer Lagen bzw. Schichten ist insbesondere auf obige Ausführungen verwiesen.

Fig. 3e zeigt beispielhaft eine Spenderfolie 301 mit einer Spenderträgerlage 31, einer weiteren Spenderträgerlage 31a und einer Spendertransferlage 32, wobei Ausnehmungen 6 in die weitere Spenderträgerlage 31a eingebracht sind, sodass die Spenderfolie 301 vorzugsweise wie die in Fig. 3d beschriebene Spenderfolie 301 auf eine Empfängerfolie 2 aufgetragen und die Spenderträgerlage 31 und/oder die weitere Spenderträgerlage 31a vorteilhaft abgelöst wird.

Weiter umfasst die Spendertransferlage 32 eine Spenderkleberschicht 34, welche bevorzugt dazu dient die jeweilige Spendertransferlage 32, die bevorzugt einen ein oder mehrere Folienelemente 311 bis 314 bildenden Ausschnitt der Spenderfolie 301 bildet, auf die Empfängerfolie 2 aufzubringen. Bevorzugt weist die Spendertransferlage 32 eine Dekorlage 4a auf, welche hierbei beispielhaft durch eine Druckschicht gebildet wird.

Weiter ist es möglich, dass die weitere Spenderträgerlage 31a von der Spenderträgerlage 31 ablösbar ausgestaltet ist, derart, dass die weiteren Spenderträgerlagen 31a, vorzugsweise nach einem Aufbringen der jeweiligen Spenderfolie 301 auf eine Empfängerfolie 2 und nach einem anschließenden zumindest bereichsweise Ablösen der Spenderträgerlage 32 von ein oder mehreren ersten Teilbereichen der jeweiligen Spendertransferlage 32, als Folienelemente auf der Empfängerfolie 2 verbleiben.

Weiter ist es insbesondere möglich, dass die Spenderfolie 301 mit der weiteren Spenderträgerlage 31a an den Stellen der Ausnehmungen 6 Leerstellen ausbildet, wobei die weitere Spenderträgerlage 31a mit den Leerstellen auf die Spenderträgerlage 31 appliziert wird, vorzugsweise mit einer auf der weiteren Spenderträgerlage 31a angeordneten Spendertransferlage 32.

Insbesondere handelt es sich bei der Spenderträgerlage 31 und/oder bei den weiteren Spenderträgerlagen 31a um einen PET-Träger.

Bezüglich der spezifischen Ausgestaltung der Lagen bzw. Schichten, sowie weiterer Lagen bzw. Schichten ist insbesondere auf obige Ausführungen verwiesen.

Fig. 3f zeigt beispielhaft die in Fig. 3e gezeigte Spenderfolie in Ansicht von Unten.

Weiter sind hier beispielhaft Registermarken 13 aufgebracht.

Bezüglich der spezifischen Ausgestaltung der Lagen bzw. Schichten, sowie weiterer Lagen bzw. Schichten ist insbesondere auf obige Ausführungen verwiesen.

Fig. 4a zeigt beispielhaft eine Spenderfolie 301 mit einer Spenderträgerlage 31, einer Spenderablöseschicht 33 und einer Spendertransferlage 32, welche eine optionale Spenderkleberschicht 34 aufweist, wobei die Spenderkleberschicht 34 bevorzugt eine Heißsiegelkleberschicht ist, welche mittels Druck und Wärme aktiviert wird.

Vorzugsweise werden der Druck und die Wärme in Schritt c) mittels Heißprägen durch einen beheizten Prägestempel erzeugt. Weiter weist die Spendertransferlage 32 eine Dekorlage 4a auf, vorzugsweise mit einer Replizierschicht 9a, in welche insbesondere mindestens eine optisch aktive Oberflächenstruktur eingebracht ist, und welche bevorzugt zwischen der optionalen Spenderkleberschicht 34 und der Spenderablöseschicht 33 angeordnet ist.

Weiter weist die Dekorlage 4a zwischen der Replizierschicht 9a und der optionalen Spenderkleberschicht 24 eine Reflexionsschicht 10a auf, bevorzugt eine metallische Reflexionsschicht, welche insbesondere partiell aufgebracht ist, bevorzugt zumindest partiell auf der mindestens einen optisch aktiven Oberflächenstruktur der Replizierschicht 9a aufgebracht ist.

Weiter ist es möglich, dass die Spendertransferlage eine Assistenzschicht 11a zwischen der Spenderablöseschicht 33 und der Replizierschicht 9a aufweist. Bezüglich der spezifischen Ausgestaltung der Lagen bzw. Schichten, sowie weiterer Lagen bzw. Schichten ist insbesondere auf obige Ausführungen verwiesen.

Fig. 4b zeigt beispielhaft eine Empfängerfolie 2 mit einer Empfängerträgerlage 21, einer Empfängerablöseschicht 23 und einer Empfängertransferlage 22, welche insbesondere eine Empfängerkleberschicht 24 aufweist.

Weiter weist die Empfängertransferlage 22 insbesondere eine Dekorlage 4b auf, vorzugsweise mit einer Reflexionsschicht 10b, welche bevorzugt eine HRI-Schicht aufweist und/oder eine teiltransparente HRI-Schicht aufweist, und welche zwischen der optionalen Empfängerkleberschicht 24 und der Empfängerablöseschicht 23 angeordnet ist.

Eine HRI-Schicht (HRI = High Refractive Index) ist eine Schicht mit einem hohen Brechungsindex, insbesondere mit einem Brechungsindex von mehr als 1,5, bevorzugt von mehr als 1,7.

Weiter weist die Dekorlage 4b vorzugsweise eine Replizierschicht 9b auf, in welche insbesondere mindestens eine weitere optisch aktive Oberflächenstruktur eingebracht ist, und welche zwischen der Reflexionsschicht 10b und der Empfängerablöseschicht 23 angeordnet ist.

Die Empfängertransferlage 22 weist zudem bevorzugt eine Assistenzschicht 11b zwischen der Replizierschicht 9b und der Empfängerablöseschicht 23 auf. Insbesondere bildet die Empfängertransferlage 22 ein diffraktives Merkmal, bevorzugt ein diffraktives Sicherheitsmerkmal, aus.

Weiter ist es möglich, dass die Reflexionsschicht ein Dünnfilmsystem aufweist.

Vorzugsweise ist die Empfängerfolie 2 eine Empfängertransferfolie, wobei die Empfängertransferlage 22 ablösbar von der Empfängerträgerlage 21 ist, wobei die Ablösung bzw. die Trennung der Empfängertransferlage 22 von der Empfängerträgerlage 21 bevorzugt durch eine Ablöseschicht 23, welche ein oder mehrere Wachsschichten umfasst, sichergestellt wird.

Die Reflexionsschicht 10b ist vorzugsweise zumindest partiell auf der mindestens einen weiteren optisch aktiven Oberflächenstruktur der Replizierschicht 9b aufgebracht.

Auf der Reflexionsschicht 10b ist vorzugsweise eine Empfängerkleberschicht 24 angeordnet, bevorzugt eine Heißsiegelkleberschicht, welche mittels Druck und Wärme aktiviert wird. Vorzugsweise werden der Druck und die Wärme in Schritt c) mittels Heißprägen durch einen beheizten Prägestempel erzeugt.

Es ist möglich, dass die Empfängerkleberschicht 24 eine Haftvermittlerschicht aufweist, welche vorzugsweise einer verbesserten Anbindung der Empfängerkleberschicht 24 an die Reflexionsschicht dient.

Weiter ist es möglich, dass die Empfängerkleberschicht 24 insbesondere partiell aufgetragen ist, vorzugsweise individuell auf ein oder mehrere erste Teilbereiche aufgetragen wird. Vorzugsweise ist die Empfängerkleberschicht 24 strahlungshärtbar. Hierbei wird Schritt c) vorzugsweise mittels Kaltprägen durchgeführt, wobei die ein oder mehreren Spenderfolien mit der Empfängerkleberschicht 24 verbunden werden und der Kleber mittels Bestrahlung gehärtet wird.

Beim Ablösen der jeweiligen Spenderträgerlage 31 bleiben zweckmäßigerweise die in den ein oder mehreren ersten Teilbereichen, auf welchen die Empfängerkleberschicht 24 angeordnet ist, angeordneten Spendertransferlagen als Folienelemente 311 bis 314 an der Empfängerfolie 2 haften.

Bezüglich der spezifischen Ausgestaltung der Lagen bzw. Schichten, sowie weiterer Lagen bzw. Schichten ist insbesondere auf obige Ausführungen verwiesen.

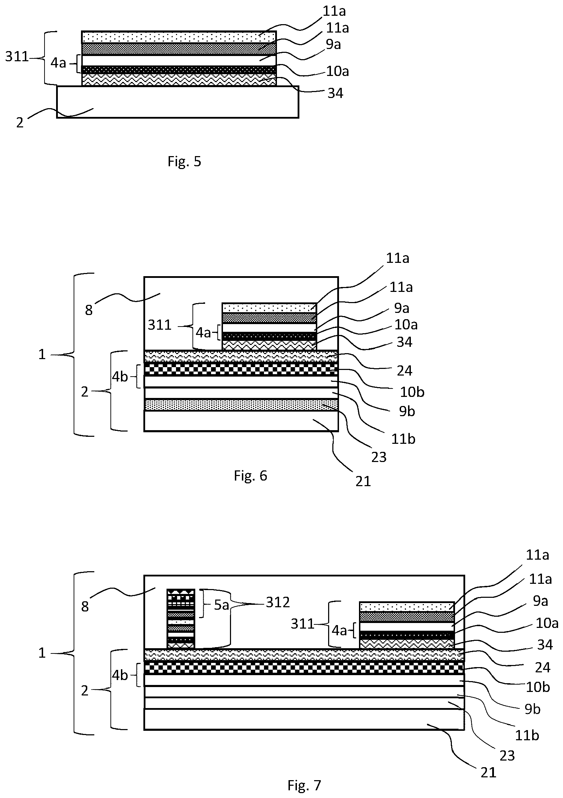

Fig. 5 zeigt beispielhaft die in Fig. 4a abgebildete Spendertransferlage 32, welche auf eine Empfängerfolie 2 aufgebracht ist und somit einen ein Folienelement 311 bildenden Ausschnitt der Spenderfolie 301 bildet. Hierbei kann beispielsweise eine obere Assistenzschicht 11a auf der Spendertransferlage 32 und/oder dem Folienelement 311 vorgesehen sein, welche auf der äußersten der Empfängerfolie 2 abgewandten Seite angeordnet ist.

Insbesondere weist die obere Assistenzschicht 11a eine Kleberschicht auf, welche bevorzugt eine Kleberschicht der Spenderablöseschicht 33 der jeweiligen Spenderfolie 301 ist, welche das Folienelement 311 bildet.

Vorzugsweise weist die Spenderablöseschicht 33 weiter mindestens eine Wachsschicht auf, so dass bei einem Ablösen der Spenderträgerlage 31 von der Spendertransferlage 32 diese Kleberschicht auf der Spendertransferlage 32 und als Schicht des Folienelements 311 auf der Empfängerfolie 2 verbleibt. Diese Kleberschicht dient dann insbesondere zur Verbindung des Folienzwischenprodukts 1 mit einem Zielsubstrat.

Hierbei wird die Form des aufgebrachten Folienelements 311 insbesondere bestimmt durch die Form des Prägestempels bei einem Heißprägen in Schritt c).

Weiter ist es möglich, dass die Form des aufgebrachten Folienelements 311 dadurch bestimmt wird, dass die Kleberschicht bei einem Kaltprägen in Schritt c) gedruckt wird, insbesondere, dass in Schritt c) auf die Spenderfolie 301 und/oder auf die Empfängerfolie 2 in ein oder mehreren ersten Teilbereichen 20b eine Kleberschicht, insbesondere mittels eines digitalen Druckverfahrens, aufgedruckt wird, in ein oder mehreren zweiten Teilbereichen jedoch nicht aufgedruckt wird.

Weiter ist es bevorzugt möglich, dass die Form des Folienelements 311 durch Ausnehmungen 6, Durchtrennungen 7a, 7b und/oder Leerstellen bestimmt wird, wie dies insbesondere in Fig. 3d, Fig. 3e und Fig. 3f beschrieben ist.

Weiter ist es möglich, dass die Empfängerfolie 2 eine Empfängertransferfolie mit einer Empfängertransferlage 21 ist, wobei das Folienelement 311 bzw. weitere Folienelemente auf die Empfängertransferlage 21 aufgebracht werden.

Bezüglich der spezifischen Ausgestaltung der Lagen bzw. Schichten, sowie weiterer Lagen bzw. Schichten ist insbesondere auf obige Ausführungen verwiesen.

Fig. 6 zeigt beispielhaft ein Folienzwischenprodukt 1, wobei ein Folienelement 311 aus einem Ausschnitt einer wie in Fig. 5 beschriebenen Spendertransferlage 32 auf eine wie in Fig. 4b beschriebene Empfängerfolie 2 aufgebracht ist.

Hierbei ist eine weitere Kleberschicht 8 auf die Empfängerfolie 2 und die Spendertransferlage 32 bzw. das Folienelement 311 appliziert, welche ein- oder mehrschichtig ist und bevorzugt zur Verbindung des Folienzwischenprodukts 1 mit einem Zielsubstrat verwendet wird.

Es hat sich als vorteilhaft erwiesen, wenn sich die Erweichungstemperatur der Spenderkleberschicht 34 und der Empfängerkleberschicht 24 unterscheidet, und/oder dass sich die Erweichungstemperatur der Spenderkleberschicht 34 und/oder die Erweichungstemperatur der Empfängerkleberschicht 24 von der Erweichungstemperatur der weiteren Kleberschicht 8 unterscheidet, insbesondere dass die Erweichungstemperatur der Spenderkleberschicht 34 die Erweichungstemperatur der Empfängerkleberschicht 24 um mindestens 2,5°C unterschreitet, vorzugsweise um mindestens 5°C unterschreitet, bevorzugt um mindestens 7,5°C unterschreitet.

Weiter hat es sich als vorteilhaft erwiesen, dass die Erweichungstemperatur der weiteren Kleberschicht 8 die Erweichungstemperatur der Spenderkleberschicht 34 und/oder der Empfängerkleberschicht 24 um mindestens 2,5°C unterschreitet, insbesondere um mindestens 5°C unterschreitet, bevorzugt um mindestens 7,5°C unterschreitet und/oder dass eine Erweichung der weiteren Kleberschicht 8 durchgeführt wird, wobei die Temperatur der Spenderkleberschicht 34 und/oder der Empfängerkleberschicht 24 um mindestens 2,5°C geringer ist, insbesondere um mindestens 5°C geringer ist, bevorzugt um mindestens 7,5°C geringer ist als die Erweichungstemperatur der jeweiligen Spenderkleberschicht 34 bzw. Empfängerkleberschicht 24.

Weiter ist es möglich, dass die Spenderkleberschicht 34, insbesondere nach dem Schritt c), chemisch und/oder durch Strahlung vernetzt wird und/oder dass die Erweichungstemperatur der Spenderkleberschicht 34 und/oder Empfängerkleberschicht 24 nach Schritt c) erhöht wird.

Bezüglich der spezifischen Ausgestaltung der Lagen bzw. Schichten, sowie weiterer Lagen bzw. Schichten ist insbesondere auf obige Ausführungen verwiesen.

Fig. 7 zeigt beispielhaft ein Folienzwischenprodukt 1, welches zusätzlich zu dem in Fig. 6 dargestellten Folienzwischenprodukt 1, ein weiteres Folienelement 312 aufweist. Dieses Folienelement 312 weist, insbesondere zusätzlich zu dem in Figur 5 beschriebenen Folienelement 311, eine funktionelle Lage 5a auf.

Insbesondere ist es möglich, dass weitere Folienelemente, welche bevorzugt eine Dekorschicht 4a, eine funktionelle Lage 5a, eine Assistenzschicht 11a und/oder eine Delaminierungslage 18 aufweisen, auf die Empfängerfolie 2 aufgebracht sind, vorzugsweise in beliebiger Anordnung. Insbesondere ist es auch möglich, dass ein Folienelement 314 eine Druckschicht mit lumineszierenden, bevorzugt fluoreszierenden, Farbstoffen aufweist.

Vorzugsweise wird ein Folienzwischenprodukt 1, welches mindestens eine funktionelle Lage 5a, 5b aufweist, durch Einspritzen einer Spritzgussmasse auf das Zielsubstrat appliziert, wobei insbesondere die Spritzgussmasse das Zielsubstrat ausbildet.

Hierbei wird das Folienzwischenprodukt 1 bevorzugt als Insert-Sheet verwendet, insbesondere mit einer Breite von 10 mm bis 800 mm, einer Länge von 15 mm bis 1200 mm und einer Dicke von 20 µm bis 300 µm.

Bezüglich der spezifischen Ausgestaltung der Lagen bzw. Schichten, sowie weiterer Lagen bzw. Schichten ist insbesondere auf obige Ausführungen verwiesen.

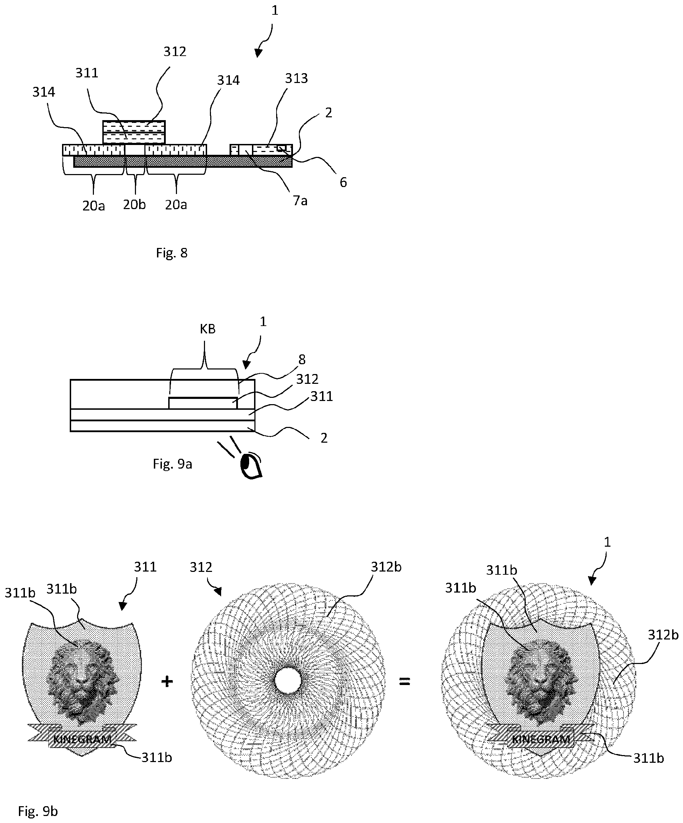

Fig. 8 zeigt beispielhaft eine mögliche Anordnung von Folienelementen 311 bis 314 auf der Empfängerfolie.

Weiter wird beispielhaft eine Durchtrennung 7a und eine Ausnehmung 6 eines Folienelements 313 gezeigt.

Weiter ist es insbesondere möglich, dass eine Spenderträgerlage 31 einer hier nicht abgebildeten Spenderfolie 304 derart abgelöst wird, dass bei einem zumindest bereichsweise Ablösen der Spenderträgerlage 31 erste Teilbereiche 20a als Folienelemente 314 auf der Empfängerfolie 2 verbleiben und optional zweite Teilbereiche 20b der Spendertransferlage 32 mit der Spenderträgerlage 31 abgezogen werden. Die Folienelemente 314 sind bevorzugt gleichartig und/oder voneinander verschieden. Weiter ist es möglich, dass die Folienelemente 314 beispielhaft in einem regelmäßigen ein- oder zweidimensionalen Raster angeordnet sind.

Es hat sich als vorteilhaft erwiesen, dass zumindest in die ein oder mehreren Spenderfolien 301 bis 304, insbesondere in die Spendertransferlage 32, Durchtrennungen 7a, 7b und/oder Ausnehmungen 6 eingebracht werden, wobei vorzugsweise die Durchtrennungen 7a, 7b und/oder Ausnehmungen 6 zwischen den ersten und zweiten Teilbereichen 20a, 20b der jeweiligen Spendertransferlage 32 eingebracht werden.

Bezüglich der spezifischen Ausgestaltung der Lagen bzw. Schichten, sowie weiterer Lagen bzw. Schichten ist insbesondere auf obige Ausführungen verwiesen.

Fig. 9a zeigt beispielhaft ein Folienzwischenprodukt 1, welches ein Folienelement 311 aufgebracht auf eine Empfängerfolie 2 aufweist. Auf diesem Folienelement 311 ist ein weiteres Folienelement 312 angeordnet.

Ferner ist eine weitere Kleberschicht 8 aufgebracht, welche bevorzugt auf die zwei Folienelemente 311 und 312 aufgebracht ist. Weiter ist es insbesondere möglich, dass die weitere Kleberschicht 8 auch mit der Empfängerfolie 2 in Berührung steht.

Die Empfängerfolie 2 ist vorzugsweise nicht ablösbar, bevorzugt nicht ablösbar und zumindest teilweise transparent, bevorzugt im UV-Bereich und/oder einem für das menschliche Auge sichtbaren Bereich zumindest teilweise transparent. Es ist insbesondere weiter möglich, dass die Empfängerfolie 2 zumindest teilweise ablösbar ist, bevorzugt, dass die Empfängerfolie 2 eine ablösbare Empfängerträgerlage 21 aufweist.

Bevorzugt wird ein Folienelement 311 teilweise von einem anderen Folienelement 312 überlappt. Vorzugsweise überlappt dabei das teilweise überlappte Folienelement 311 das andere Folienelement 312 vollständig und/oder teilweise.

Weiter sind optische Effekte des weiteren Folienelements 312 durch das teilweise überlappte Folienelement 311 zumindest partiell erkennbar, bevorzugt zumindest partiell mit dem menschlichen Auge sichtbar.

Insbesondere weist das teilweise überlappte Folienelement 311 zumindest in einem von dem weiteren Folienelement 312 überlappten Bereich eine Replizierschicht auf.

Vorzugsweise weist das teilweise überlappte Folienelement 311 auf seiner der Empfängerfolie 2 abgewandten Seite eine Schicht auf, welche mit einer der Empfängerfolie 2 zugewandten Seite des weiteren Folienelements 312 in Berührung steht, wodurch ein Kontaktbereich KB gebildet wird.

Zwischen der Schicht des teilweise überlappten Folienelements 311 und der mit dieser Schicht in Berührung stehenden Schicht des weiteren Folienelements 312 ist der Brechungsindexunterschied vorzugsweise kleiner als oder gleich 0,2, bevorzugt kleiner als 0,1.

Es ist weiter möglich, dass der Brechungsindexunterschied kleiner als 0,2 ist, bevorzugt kleiner als 0,1 ist. Dies zumindest in 50% des Kontaktbereichs KB. In den restlichen Bereichen des Kontaktbereichs KB ist insbesondere eine HRI-Schicht und/oder eine Metallschicht vorgesehen.

Weiter ist es möglich, dass der Brechungsindexunterschied größer als 0,3 ist, bevorzugt größer als 0,5 ist, wobei insbesondere eine HRI-Schicht vorgesehen ist.

Bezüglich der spezifischen Ausgestaltung der Lagen bzw. Schichten, sowie weiterer Lagen bzw. Schichten ist insbesondere auf obige Ausführungen verwiesen.

Fig. 9b zeigt ein konkretes Designbeispiel, welches mit dem Aufbau aus Fig. 9a realisiert werden kann. Zu sehen sind ein Folienelement 311, aufgebracht auf einer Empfängerfolie 2, ein Folienelement 312 sowie ein Folienzwischenprodukt 1, bei welchem das Folienelement 312 so auf die Empfängerfolie 2, und insbesondere auf das Folienelement 311, aufgebracht ist, dass es mit dem Folienelement 311 teilweise überlappt.

Es ist insbesondere auch möglich, dass das Folienelement 312 aufgebracht auf einer Empfängerfolie 2 ist und das Folienelement 311 im Folienzwischenprodukt 1 so auf die Empfängerfolie 2, und insbesondere das Folienelement 312, aufgebracht ist, dass es mit dem Folienelement 312 teilweise überlappt.

Zweckmäßigerweise ist die Empfängerfolie 2 bevorzugt transparent und/oder hier insbesondere nicht abgebildet.

Hierbei wird das Folienzwischenprodukt 1, insbesondere ausgehend von Fig. 9a in Ansicht von Unten, gezeigt. Ein Betrachter schaut somit, insbesondere in Betrachtung senkrecht auf eine von dem Folienzwischenprodukt 1 aufgespannte Ebene, durch die Empfängerfolie 2 und/oder durch die Empfängerträgerlage 21 und/oder durch die Empfängertransferlage 22, auf die Folienelemente 311, 312 des Folienzwischenprodukts 1.

Die Dekorlage 4a des Folienelements 311 weist mehrere teilflächig vorgesehene Schichten 311b auf. Die teilflächig vorgesehenen Schichten 311b sind jeweils vorzugsweise musterförmig angeordnet, wobei die Muster insbesondere in Form von einem Wappen, einem Löwenkopf und einem Banner mit dem Schriftzug "Kinegram" ausgebildet sind.

Zweckmäßigerweise ist auf den teilflächig vorgesehenen Schichten 311b eine Reflexionsschicht angeordnet, insbesondere eine metallische Reflexionsschicht, beispielsweise aus Aluminium, wobei die Reflexionsschicht bevorzugt nur in den teilflächig vorgesehenen Schichten 311b angeordnet ist.

Vorzugsweise weisen die teilflächig vorgesehenen Schichten 311b optisch variable Effekte auf. Zweckmäßigerweise umfassen die teilflächig vorgesehenen Schichten somit jeweils optisch aktive Oberflächenstrukturen, welche insbesondere Mikrostrukturen aufweisen.

Weiter weist das Folienelement 311 bevorzugt eine Einfärbung auf. Die Einfärbung wird bevorzugt von einer lasierenden Lackschicht ausgebildet, welche zweckmäßigerweise zwischen der Empfängerfolie 2 und den teilweise vorgesehenen Schichten angeordnet ist, so dass die teilweise vorgesehenen Schichten 311b beispielsweise in Goldfarben erscheinen, insbesondere bei einer Betrachtung des Folienelements 311 im Produkt 100.

Zumindest außerhalb der teilflächig vorgesehenen Schichten ist das Folienelement 311 und/oder die Empfängerfolie 2 zumindest teilflächig transparent oder semitransparent.

Beispielsweise weist die Dekorlage 4a des Folienelements 311 hierzu eine transparente oder semitransparente Schicht, welche insbesondere eine Lackschicht ist, auf, welche zumindest außerhalb der teilflächig vorgesehenen Schichten angeordnet ist.

Es ist insbesondere auch möglich, dass die Dekorlage 4a des Folienelements 311 eine transparente oder semitransparente Schicht, welche insbesondere eine Lackschicht ist, und/oder eine weitere transparente oder semitransparente Schicht, welche insbesondere eine Lackschicht ist, aufweist, welche auf den teilflächig vorgesehenen Schichten angeordnet ist.

Weiter ist es zweckmäßig, wenn die Empfängerfolie 2, insbesondere die Empfängertransferlage 22 und/oder die Empfängerträgerlage 21, eine transparente oder semitransparente Schicht aufweist, welche insbesondere eine Lackschicht oder eine Kunststoffschicht ist.

Somit sind Bereiche des Folienelements 312, welche nicht mit der Reflexionsschicht des Folienelements 311 überlappen, für den Betrachter, insbesondere in Betrachtung senkrecht auf eine von dem Folienzwischenprodukt 1 aufgespannte Ebene, erkennbar, insbesondere im Folienzwischenprodukt 1 und/oder im Produkt 100 erkennbar.

Das Folienelement 312 weist vorzugsweise optisch variable Effekte auf. Insbesondere weist das Folienelement 312 eine Dekorlage 4a mit einer teilflächig vorgesehene Schicht 312b auf, welche bevorzugt eine Metallschicht, beispielsweise aus Aluminium, umfasst und insbesondere als Reflexionsschicht dient. Die teilflächig vorgesehene Schicht 312b ist zweckmäßigerweise musterförmig angeordnet, bevorzugt bildet die teilflächig vorgesehene Schicht 312b teilmetallisierte Linien aus. Die teilmetallisierten Linien formen vorzugsweise eine Guilloche.

Zweckmäßigerweise sind in der teilflächig vorgesehenen Schicht 312b des Folienelements 312 optisch aktive Oberflächenstrukturen, insbesondere Mikrostrukturen, vorgesehen. Die optisch aktiven Oberflächenstrukturen, insbesondere die Mikrostrukturen, erzeugen beispielsweise ein sequentielles Aufleuchten der Linien, insbesondere als scheinbaren Bewegungseffekt.

Da die Einfärbung des Folienelements 311, insbesondere die lasierende Lackschicht des Folienelements 311, nicht in der teilflächig vorgesehenen Schicht 312b des Folienelements 312, insbesondere den teilmetallisierten Bereichen des Folienelementes 312, vorliegt, erscheint die teilflächig vorgesehene Schicht 312b des Folienelements 312 in einer anderen Farbe als die teilweise vorgesehenen Schichten 311b des Folienelements 311. Insbesondere erscheint die Guilloche des Folienelements 312 silbern.

Für den Betrachter des Folienzwischenproduktes 1 und/oder des Produkts 100 gibt es somit zwischen den teilflächig vorgesehenen Schichten 311b und der teilflächig vorgesehenen Schicht 312b, insbesondere zwischen den goldfarbenen teilflächig vorgesehenen Schichten 311b und der silberfarbenen Guilloche, keine Lücke, insbesondere bei Betrachtung senkrecht auf eine von dem Folienzwischenprodukt 1 aufgespannte Ebene.

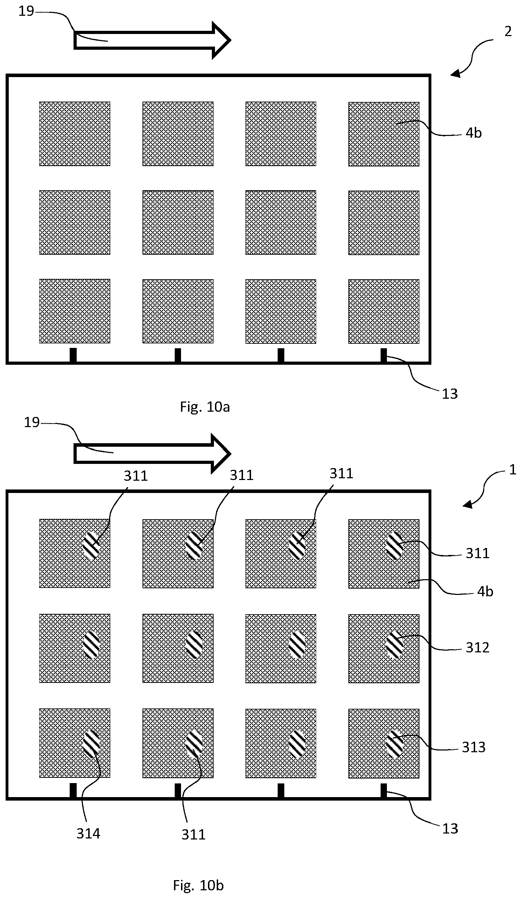

Fig. 10a zeigt einen möglichen Schritt a), ein Bereitstellen einer Empfängerfolie 2, in Draufsicht. Insbesondere wird die Empfängerfolie 2 mit der dargestellten Laufrichtung 19, bevorzugt in einem Rolle-zu-Rolle Verfahren, bereitgestellt. Beispielsweise weist die Empfängerfolie 2 bereits Dekorlagen 4b auf.

Bevorzugt weist die Empfängerfolie 2 Registermarken 13, welche insbesondere gedruckt, diffraktiv und/oder teilmetallisiert sind, für ein registergenaues Aufbringen weiterer Schichten und/oder ein oder mehrerer Folienelemente 311, 312, 313, 314 auf. Es ist ferner möglich, dass Registermarken quer zur Laufrichtung 19 angeordnet werden. Weiter ist es möglich, dass Schichten der Empfängerfolie 2 die Funktion von Registermarken übernehmen, bevorzugt diffraktive Elemente der Empfängerfolie 2. Weiter ist es möglich, dass die Empfängerfolie 2 ein oder mehrere Dekorlagen 4b, funktionelle Lagen 5b und/oder Delaminierungslagen aufweist.

Bezüglich der Ausgestaltung dieser Lagen wird hier insbesondere auf obige Ausführungen verwiesen.

Fig. 10b zeigt einen möglichen Schritt c), ein Aufbringen ein oder mehrerer Folienelemente 311, 312, 313, 314, welches bzw. welche jeweils von einem Ausschnitt einer der ein oder mehreren Spenderfolien 301, 302, 303 gebildet wird bzw. werden, auf die Empfängerfolie 2. Hierbei wird beispielsweise das abgebildete Folienzwischenprodukt 1 hergestellt, welches eine beispielhaft in Fig. 10a beschriebene Empfängerfolie 2 und verschiedene Folienelemente 311, 312, 313, 314 aufweist. Die Folienelemente 311, 312, 313, 314 werden bevorzugt registergenau aufgebracht.

Vorzugsweise weist ein Folienzwischenprodukt 1 quer zur Laufrichtung 19 gleichartige und/oder voneinander verschiedene Folienelemente 311, 312, 313, 314 auf.

Es ist jedoch auch möglich, dass auf die abgebildete Empfängerfolie 2 mit den aufgebrachten Folienelementen 311 bis 314 weitere Folienelemente aufgebracht werden, bevor das Folienzwischenprodukt 1 hergestellt ist und/oder dass das Folienzwischenprodukt 1 als Spenderfolie 301 bis 304 oder Empfängerfolie 2 in einem Verfahren zur Herstellung eines Folienzwischenprodukts 1 verwendet wird.

Hierbei ist es bevorzugt möglich, dass die Empfängerfolie 2 eine Heißprägefolie ist und der Schritt c) mittels Heißprägen durchgeführt wird, wobei zweckmäßigerweise mindestens eine der ein oder mehreren Spenderfolien 301 bis 304 eine Heißprägefolie ist.

Bezüglich der spezifischen Ausgestaltung der Lagen bzw. Schichten, sowie weiterer Lagen bzw. Schichten ist insbesondere auf obige Ausführungen verwiesen.

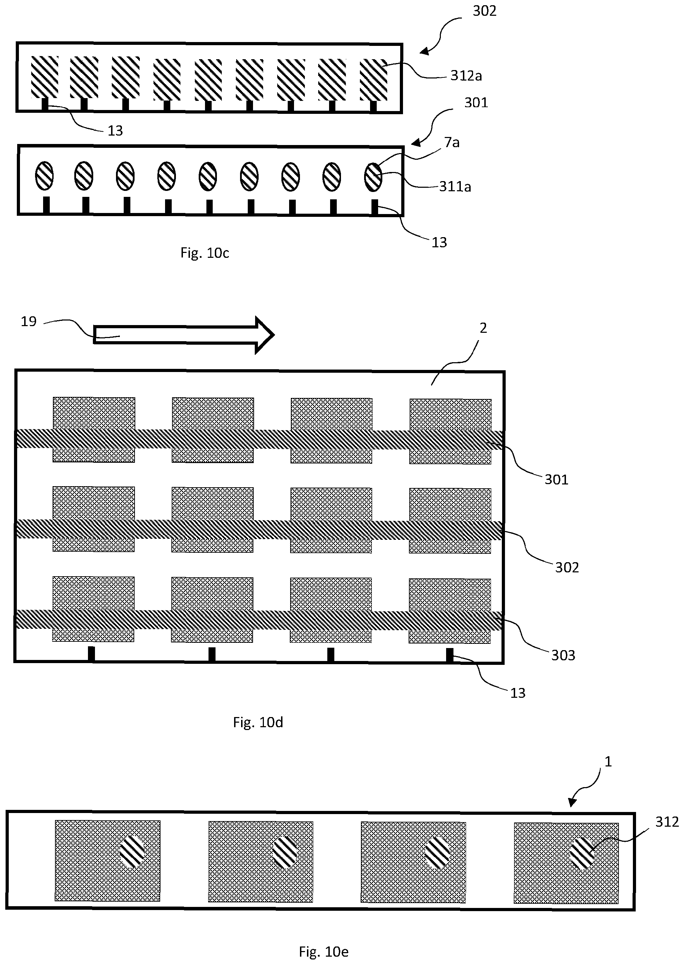

Fig. 10c zeigt einen möglichen Schritt b) einer Herstellung eines Folienzwischenprodukts 1, ein Bereitstellen ein oder mehrerer Spenderfolien 301, 302, welche beispielsweise für das Aufbringen der in Fig. 10b dargestellten Folienelemente 311, 312, 313, 314 bereitgestellt werden. Hier sind die Spenderfolien 301, 302 beispielhaft in Bahnen bereitgestellt. Es ist insbesondere möglich, dass weitere Spenderfolien 303, 304 bereitgestellt werden und/oder weitere Folienelemente aufgebracht werden.

Hierbei ist es möglich, dass im Schritt c) ein Schritt c1), ein in Kontakt bringen von ein oder mehrerer Spenderfolien 301, 302, mit der Empfängerfolie 2 durchgeführt wird.

Nach dem Schritt c1) ist es weiter möglich, dass ein Schritt c2) durchgeführt wird, ein zumindest bereichsweises Ablösen, insbesondere mechanisches Trennen, der Spenderträgerlage 32 von ein oder mehreren ersten Teilbereichen 20a der jeweiligen Spendertransferlage derart, dass die ein oder mehreren ersten Teilbereiche 20a als Folienelemente 311, 312, 313, 314 auf der Empfängerfolie 2 verbleiben.

Nach dem Schritt c2) ist es weiter möglich, dass ein Schritt c3) durchgeführt wird, welcher ein Abziehen der jeweiligen Spenderträgerlage 31 mit ein oder mehreren zweiten Teilbereichen 20b der jeweiligen Spendertransferlage 32 von den ein oder mehreren Folienelementen 311 bis 314 umfasst.

Die oben dargestellte Spenderfolie 302 weist Ausschnittsbereiche 311a auf, aus welchen insbesondere die in Fig. 10b beschriebenen Folienelemente 312, 313, 314 auf die Empfängerfolie 2 aufgebracht werden. Das Aufbringen auf die Empfängerfolie 2 wird bei einer Spenderfolie 302 der oberen dargestellten Art, vorzugsweise mittels eines Formstempels, insbesondere bei einem Heißprägen durchgeführt. Vorzugsweise werden der für ein Heißprägen notwendige Druck und die notwendige Wärme in Schritt c) mittels Heißprägen durch einen beheizten Prägestempel erzeugt.

Die unten dargestellte Spenderfolie 301 weist Ausschnittsbereiche 311a auf, aus welchen insbesondere die in Fig. 10b beschriebenen Folienelemente 311 auf die Empfängerfolie 2 aufgebracht werden. Hierbei weist die Spenderfolie 301 vorzugsweise zumindest teilweise Durchtrennungen 7a auf, welche die Ausschnittsbereiche 311a umschließen. Vorzugsweise werden die Durchtrennungen 7a mittels Stanzen eingebracht.

Das Aufbringen der Folienelemente 311 bis 314 auf die Empfängerfolie 2 wird bei einer Spenderfolie 302 der unten dargestellten Art, vorzugsweise mittels eines Prägetempels durchgeführt, bei welchem die Form des Stempels größer sein kann als die eines Formstempels, welcher bei einem Aufbringen eines Folienelements mit der oben dargestellten Spenderfolie 302 eingesetzt würde, um vergleichbare Folienelemente auf die Empfängerfolie 2 aufzubringen. Vorzugsweise werden der für ein Heißprägen notwendige Druck und die notwendige Wärme in Schritt c) mittels Heißprägen durch einen beheizten Prägestempel erzeugt.

Weiter ist es möglich, dass eine strahlungshärtbare Kleberschicht auf die Empfängerfolie 2 und/oder eine der Spenderfolien 301, 302 aufgedruckt wird, insbesondere partiell aufgetragen wird, vorzugsweise individuell auf ein oder mehrere erste Teilbereiche aufgetragen wird.

Hierbei wird Schritt c) vorzugsweise mittels Kaltprägen durchgeführt, wobei die ein oder mehreren Spenderfolien 301, 302 mit der Empfängerfolie 2 verbunden werden und der Kleber mittels Bestrahlung gehärtet wird. Beim Ablösen der jeweiligen Spenderträgerlage 31 bleiben die in den ein oder mehreren ersten Teilbereichen 20a, auf welchen die Kleberschicht angeordnet ist, angeordneten Ausschnitte der jeweiligen Spendertransferlagen 32 als Folienelemente 311 bis 314 an der Empfängerfolie 2 haften.

Optionale Haftvermittlerschichten auf der Empfängerfolie 2 und/oder mindestens einer der ein oder mehreren Spenderfolien 301, 302 sichern vorzugsweise den Verbund zwischen den Einzelschichten der Empfängerfolie 2, der Empfängertransferlage 22, mindestens einer der ein oder mehreren Spenderfolien 301, 302 und/oder den jeweiligen Spendertransferlagen 32.

Vorzugsweise weist eine Bahn in Laufrichtung 19 und/oder quer zur Laufrichtung 19 gleichartige und/oder voneinander verschiedene Ausschnittsbereiche 311a bis 314a und/oder Ausschnitte der ein oder mehreren Spenderfolien 301, 302 auf.

Insbesondere bedeckt eine Spenderfolie 301, 302 in Draufsicht bzw. in Betrachtung senkrecht auf die jeweilige Spenderfolie 301, 302 und die jeweilige Empfängerfolie 2 bei dem Aufbringen der jeweiligen Folienelemente 311, 312, 313, 314 lediglich eine Fläche von 0,2% bis 20%, bevorzugt eine Fläche von 0,5% bis 5% der Empfängerfolie 2.

Hierdurch wird der Vorteil erzielt, dass zur Herstellung des Folienzwischenprodukts 1, insbesondere in Relation zur Fläche der jeweiligen Folienelemente 311, 312, 313, 314, ein geringerer Ausschuss an Materialien der Spenderfolien 301, 302 entsteht.

Vorzugsweise weisen die Spenderfolien Registermarken 13 auf, welche ein registergenaues Aufbringen der ein oder mehreren Folienelemente 311, 312, 313, 314 auf die Empfängerfolie 2 ermöglichen. Beispielsweise ist dadurch, insbesondere in einem Rolle-zu-Rolle Verfahren, ein registergenaues Aufbringen mit unterschiedlichen Vorschubdistanzen der Spenderfolien 301, 302, welche bevorzugt geringere Abstände der aufzubringenden Bereiche 311a, 312a bzw. der Registermarken 13 aufweisen als die jeweils aufgebrachten Folienelemente 311, 312 bzw. die Registermarken 13 der Empfängerfolie 2, und der Empfängerfolie 2 möglich. Bevorzugt werden die beiden Bahnen bzw. die beiden Spenderfolien 301, 302 separat zugeführt. Insbesondere werden die beiden Spenderfolien 301, 302 separat gefertigt.

Bezüglich der spezifischen Ausgestaltung der Lagen bzw. Schichten, sowie weiterer Lagen bzw. Schichten ist insbesondere auf obige Ausführungen verwiesen.

Fig. 10d zeigt eine Empfängerfolie 2 mit streifenförmig bereitgestellten Spenderfolien 301, 302, 303.

Das Aufbringen der ein oder mehreren Folienelemente 311, 312, 313 wird vorzugsweise in Laufrichtung 19 und/oder quer zur Laufrichtung 19 registergenau durchgeführt. Hierbei werden bevorzugt die Bahnzüge der jeweiligen Spenderfolien 301 bis 303 und/oder der Empfängerfolie 2 für ein registergenaues Aufbringen der Folienelemente 311, 312, 313 auf die Empfängerfolie 2 eingestellt.

Weiter ist es möglich, dass für ein registergenaues Aufbringen der Folienelemente 311, 312, 313 auf die Empfängerfolie 2 die Vorschubdistanz der Empfängerfolie 2 und/oder der jeweiligen Spenderfolie 301, 302, 303 eingestellt wird.

Weiter ist es möglich, dass bei Betrachtung senkrecht auf die von einer Spenderfolie bzw. von einem Folienelement aufgespannte Ebene, bevorzugt in einer wie in Fig. 10d dargestellten Draufsicht, die Breite des Streifens einer der ein oder mehreren Spenderfolien 301, 302, 303 senkrecht zur Laufrichtung 19 über die Länge des Streifens in Laufrichtung 19 variiert, vorzugsweise dass die Umrissform einer der ein oder mehreren Spenderfolien 301, 302, 303 zumindest teilweise nichtlinear verläuft, bevorzugt wellenförmig.

Die Formgestaltung, insbesondere die Formgestaltung mindestens eines Folienelements 311, 312, 313, erfolgt beispielsweise durch einen partiellen Druck beim Kaltprägen, einen nur partiell aufgebrachten Heißprägekleber, und/oder beim Heißprägen aufgrund der Form des Prägewerkzeugs. Weiter ist es möglich, dass die Formgestaltung durch einen Zuschnitt der Spenderfolie 301, 302, 303 erfolgt.

Beispielsweise wird ein Folienelement 311, 312, 313, insbesondere ein streifenförmiges Folienelement 311, 312, 313, in der Ausdehnung durch den vorgängigen Zuschnitt der jeweiligen Spenderfolie 301, 302, 303 in Streifenform bestimmt.

Insbesondere verläuft die Umrissform eines der ein oder mehreren Folienelemente 311, 312, 313, welches bevorzugt von einem Ausschnitt einer streifenförmig bereitgestellten Spenderfolie 301, 302, 303 gebildet wird, in Form von Linien, Motiven und/oder Text.

Weiter ist es möglich, dass bei Betrachtung senkrecht auf die von einer Spenderfolie bzw. von einem Folienelement aufgespannte Ebene, bevorzugt in einer wie in Fig. 10d dargestellten Draufsicht, eine oder mehrere der ein oder mehreren Spenderfolien 301 bis 303 und/oder ein oder mehrere der ein oder mehreren Folienelemente 311, 312, 313 Aussparungen aufweist und/oder unterbrochen ist, bevorzugt mittels Ausnehmungen 6, Durchtrennungen 7a und/oder Leerstellen, wie insbesondere in Fig. 3c bis Fig. 3f beschrieben ist.

Insbesondere liegt die Breite des Streifens einer der ein oder mehreren Folienelemente 311, 312, 313, bevorzugt senkrecht zur Laufrichtung 19, in einem Breitenbereich von 0,5 mm bis 10 mm, bevorzugt von 1 mm bis 5 mm. Hierbei liegt die Breite des Streifens einer der ein oder mehreren Folienelemente 311, 312, 313 beispielsweise lokal in dem genannten Breitenbereich und weicht bevorzugt lokal davon ab.

Bezüglich der spezifischen Ausgestaltung der Lagen bzw. Schichten, sowie weiterer Lagen bzw. Schichten ist insbesondere auf obige Ausführungen verwiesen.

Fig. 10e zeigt beispielhaft eine Vereinzelung nach Schritt c), insbesondere durch Schneiden und/oder Stanzen, der Empfängerfolie 2 mit den ein oder mehreren Folienelementen 311 bis 314. Aus der Empfängerfolie 2 mit den Folienelementen 311 bis 314 wird vorzugsweise eine streifenförmige Bahn und/oder werden vorzugsweise mehrere streifenförmige Bahnen geschnitten, welche bevorzugt jeweils ein Folienzwischenprodukt 1 bilden.

Bevorzugt wird nach dem Schritt c) und vor der Vereinzelung, eine ein- oder mehrschichtige weitere Kleberschicht 8, wie oben beschrieben auf die Empfängerfolie 2 und/oder die ein oder mehreren Folienelemente 311 bis 314 aufgebracht.

Es ist auch möglich, dass zumindest eine Schicht der weiteren Kleberschicht 8 aus der Spenderablöseschicht 33 gebildet wird.

Insbesondere wird die weitere Kleberschicht 8 derart aufgebracht, dass Dickenunterschiede des Folienzwischenprodukts 1 zumindest teilweise ausgeglichen werden.

Weiter ist es möglich, dass bei Betrachtung senkrecht auf die von Folienzwischenprodukt 1 aufgespannte Ebene, bevorzugt in einer wie in Fig. 10e dargestellten Draufsicht, die Breite des Streifens des Folienzwischenprodukts 1 über die Länge des Streifens variiert, vorzugsweise dass die Umrissform des Folienzwischenprodukts zumindest teilweise nichtlinear verläuft, bevorzugt wellenförmig.

Es ist möglich, dass zur Herstellung eines Produkts das Folienzwischenprodukt 1 auf ein Zielsubstrat appliziert wird, bevorzugt in einem Laminator, einer Heißprägevorrichtung, einer Kaltprägevorrichtung und/oder in einer Applikationsanlage auf ein Zielsubstrat appliziert wird.

Weiter ist es möglich, dass das Folienzwischenprodukt 1 durch Einspritzen einer Spritzgussmasse auf das Zielsubstrat appliziert wird, insbesondere wobei die Spritzgussmasse das Zielsubstrat ausbildet. Hierbei ist es insbesondere möglich, dass das Folienzwischenprodukt 1 zuvor verformt wird, insbesondere tiefgezogen wird.

Vorzugsweise wird das Folienzwischenprodukt 1 nach der Vereinzelung als Insert-Sheet auf eine Spritzgussmasse appliziert und weist eine Breite im Bereich von 10 mm bis 800 mm und eine Länge im Bereich von 15 mm bis 1200 mm auf. Hierbei beträgt insbesondere die Dicke des Folienzwischenprodukts 1 bevorzugt 20 µm bis 300 µm, wobei die Dicke insbesondere über die Breite und Länge des Folienzwischenprodukts 1 variiert.

Insbesondere je nach Zielsubstrat, auf welches das Folienzwischenprodukt 1 appliziert wird, werden Dickenunterschiede des Folienzwischenprodukts 1 weiter kaschiert, sodass sie nicht augenfällig zutage treten.

Bevorzugt wird das Folienzwischenprodukt 1 auf ein poröses Zielsubstrat, wie beispielsweise Papier, appliziert, welches den Kleber je nach lokalem Druck unterschiedlich aufnimmt, sodass in Bereichen des Folienzwischenprodukts 1 mit größeren Dicken mehr Kleber in das Zielsubstrat eindringt. Dadurch wird insbesondere verhindert, dass an der Oberfläche des Produkts allfällige störende Stufen aufgrund der unterschiedlichen Dicken erkennbar sind.

Beim Einbetten in einen Schichtverbund, wie beispielsweise ein Einlaminieren in einen Polymerschichtverbund, oder auch beim Hinterspritzen mittels einer Spritzgussmasse sind insbesondere Dickenunterschiede für das Produkt wenig relevant, da sie zu wesentlichen Teilen durch fließfähiges Material ausgeglichen werden. Zusätzlich kann durch Verfließen des Klebers bei der Applikation auf das Zielsubstrat eine Egalisierung der Oberfläche erreicht werden.

Insbesondere wird das Folienzwischenprodukt 1 zur Herstellung einer Oberfläche des Produkts verwendet und wird auf ein Zielsubstrat, beispielsweise ein Papier, ein Karton, eine Kunststofffolie, ein Substrat aus ein oder mehreren Kunststoff- und/oder Papierlagen, ein Substrat umfassend ein oder mehrere Dekorlagen und/oder eine Trägerlage appliziert.

Dabei beträgt die Gesamtdicke der ein- oder mehrschichtigen weiteren Kleberschicht 8 vorzugsweise mehr als der maximale Dickenunterschied zwischen den Bereichen mit den ein oder mehreren Folienelementen 311 bis 314 und jenen Bereichen ohne Folienelemente 311 bis 314, damit die Konturen der Folienelemente 311 bis 314 an der Oberfläche nicht augenfällig erkennbar sind.

Bevorzugt beträgt die Gesamtdicke der ein- oder mehrschichtigen weiteren Kleberschicht 8 mehr als die Differenz der größten Dicke des Folienzwischenprodukts 1 und der geringsten Dicke des Folienzwischenprodukts 1, damit die Konturen der Folienelemente 311 bis 314 an der Oberfläche nicht augenfällig erkennbar sind.

Vorzugsweise wird die Dicke der weiteren Kleberschicht 8, insbesondere partiell, derart aufgetragen, dass sie in den Bereichen der Empfängerfolie 2 ohne Folienelemente 311 bis 314 und/oder in Bereichen mit der geringsten Dicke des Folienzwischenprodukts dicker ist als in den Bereichen der Empfängerfolie 2 mit Folienelementen 311 bis 314 und/oder in Bereichen mit der größten Dicke des Folienzwischenprodukts 1.

Bevorzugt wird eine zusätzliche Hilfsschicht, welche zweckmäßigerweise eine Schicht der ein- oder mehrschichtigen Kleberschicht 8 bildet, partiell im Register aufgetragen, welche Dickenunterschiede des Folienzwischenprodukts 1 ausgleicht. Die ein- oder mehrschichtige weitere Kleberschicht 8 wird dann vorzugsweise in homogener Schichtdicke aufgetragen. Beispielsweise wird nach dem Auftragen der zusätzlichen Hilfsschicht mindestens eine Schicht der weiteren Kleberschicht 8 in homogener Schichtdicke aufgetragen.

Bezüglich der Erweichungstemperatur der Empfängerkleberschicht 24, der Spenderkleberschicht 34 und der weiteren Kleberschicht 8 wird an dieser Stelle insbesondere auf die Ausführungen der Fig. 6 verwiesen.

Bei einem Transfer mittels strahlungshärtenden Kleber, insbesondere durch Ausbildung der Spenderkleberschicht 34 als strahlenhärtbaren Kleber und/oder Ausbildung der Empfängerkleberschicht 24 als strahlenhärtbaren Kleber und/oder Ausbildung der weiteren Kleberschicht 8 als strahlenhärtbarer Kleber ergeben sich Vorteile, da der Kleber nach der Härtung thermisch relativ stabil ist und/oder beim Transfer auf das Zielsubstrat nur vergleichsweise wenig Wärme und Druck eingetragen wird.

Bezüglich der spezifischen Ausgestaltung der Lagen bzw. Schichten, sowie weiterer Lagen bzw. Schichten ist insbesondere auf obige Ausführungen verwiesen.

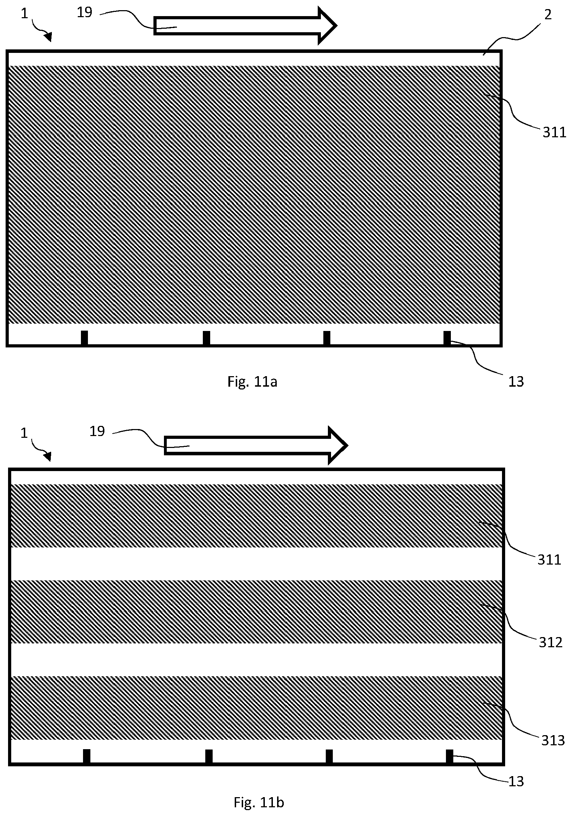

Fig. 11a zeigt beispielhaft eine Empfängerfolie 2 mit einem flächig übertragenen Folienelement 311. Hierbei ist die Spenderfolie 301 eine Spendertransferfolie. Weiter weist die Empfängerfolie 2 eine Delaminierungslage 18 auf. Besonders vorteilhaft ist eine Delaminierungslage, welche ein lokal partielles Delaminieren erlaubt, um als Schutz vor Manipulation zu dienen. Es ist auch möglich, dass die Spenderfolie 301 eine Delaminierungslage 18 aufweist.

Vorteilhafterweise liegt die Dicke der Spendertransferlage 32, bevorzugt die Dicke der Spenderträgerlage 32 summiert mit der Dicke der weiteren gegebenenfalls vorhandenen Kleberschichten 24 und 34, in einem Bereich von 1 µm bis 15 µm, bevorzugt in einem Bereich von 2 µm bis 10 µm. Die Dicke der Empfängerträgerlage liegt vorzugsweise in einem Bereich von 5 µm bis 150 µm, bevorzugt in einem Bereich von 10 µm bis 50 µm.

Hier ergibt sich der Vorteil, dass Merkmale auf Transferfolien unabhängig von den Eigenschaften und/oder der Prozessfähigkeit, bevorzugt den Anforderungen der Herstellung, der Delaminierungslage gefertigt werden.

Dadurch wird vorzugsweise eine Kombination optischer Effekte, welche insbesondere mit den ein oder mehreren Spenderfolien 301 bis 304 bereitgestellt werden, mit der Funktion einer Delaminierungslage, welche insbesondere durch die Delaminierungslage 18 der Empfängerfolie 2 bereitgestellt wird, hergestellt. Insbesondere ist eine solche Kombination bei Herstellung auf einer Folie nicht möglich und/oder nur mit höheren Kosten, mehr Ausschuss, schlechterer Fälschungssicherheit und/oder schlechterer Qualität herstellbar.

Insbesondere weist ein Folienelement 311 bis 314 optische Effekte auf, welche eine sehr hohe Replikationsqualität aufweisen, wodurch hohe Temperaturen und ein hoher Druck notwendig sind. Durch den hohen Druck und die hohen Temperaturen würde jedoch die Delaminierungslage bei einer Fertigung auf derselben Folie Schaden nehmen.

Fig. 11b zeigt beispielhaft eine Empfängerfolie 2 mit streifenförmig übertragenen Folienelementen 311, 312, 313. Hierbei ist die Spenderfolie 301 eine Spendertransferfolie. Weiter weist die Empfängerfolie 2 eine Delaminierungslage 18 auf. Es ist auch möglich, dass die Spenderfolie 301 eine Delaminierungslage 18 aufweist.

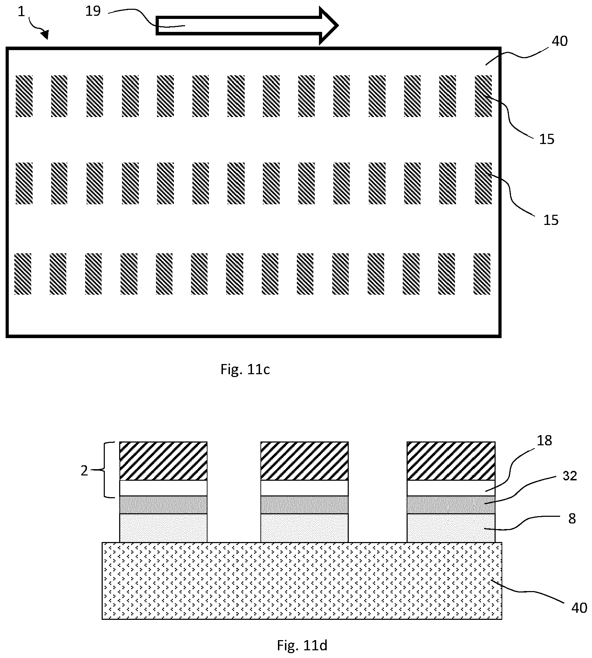

Fig. 11c zeigt ein Folienzwischenprodukt 1 in Draufsicht, welches mehrere Labels 15 aufweist. Die Labels 15 umfassen jeweils mindestens einen Ausschnitt der Empfängerfolie 2 und mindestens ein Folienelement 311 bis 314.

Fig. 11d zeigt das in Fig. 11c dargestellte Folienzwischenprodukt 1 in einer schematischen Schnittdarstellung.

Um ein solches Folienzwischenprodukt 1 herzustellen, wird vorzugsweise die Empfängerfolie 2 auf einen Träger 40, insbesondere einen silikonisierten Träger, aufgetragen. Insbesondere ist es möglich, dass nach dem Schritt c) eine weitere Kleberschicht 8, insbesondere eine PSA-Kleberschicht (PSA = Pressure Sensitive Adhesive), auf die Folienelemente 311 appliziert wird, dass die Empfängerfolie 2 mit den aufgebrachten Folienelementen 311 bis 314 mittels der weiteren Kleberschicht 8 auf den Träger 40 kaschiert wird, und dass optional die Empfängerfolie 2 gestanzt und entgittert wird. Insbesondere wird die Empfängerfolie 2 vor der Verbindung mit dem Träger 40 gestanzt und entgittert und/oder nach der Verbindung mit dem Träger 40 gestanzt und entgittert.

Vorzugsweise sind die Labels 15 mittels der PSA-Kleberschicht von dem Träger 40 zerstörungsfrei ablösbar.

Weiter ist es möglich, dass die weitere Kleberschicht 8, welche insbesondere eine PSA-Kleberschicht ist, auf den Träger 40, die Empfängerfolie 2 und/oder Teilbereiche der Empfängerfolie 2 appliziert wird.

Bevorzugt werden ein oder mehrere Labels 15 von dem Träger 40 abgelöst und auf ein weiteres Objekt appliziert, wobei die Delaminierungslage 18 dafür vorgesehen ist, bei einem Ablöseversuch des Labels 15 von dem weiteren Objekt ein Delaminieren des Labels 15 zu bewirken und/oder ein Zerreißen von Schichten des Labels 15 bewirkt.

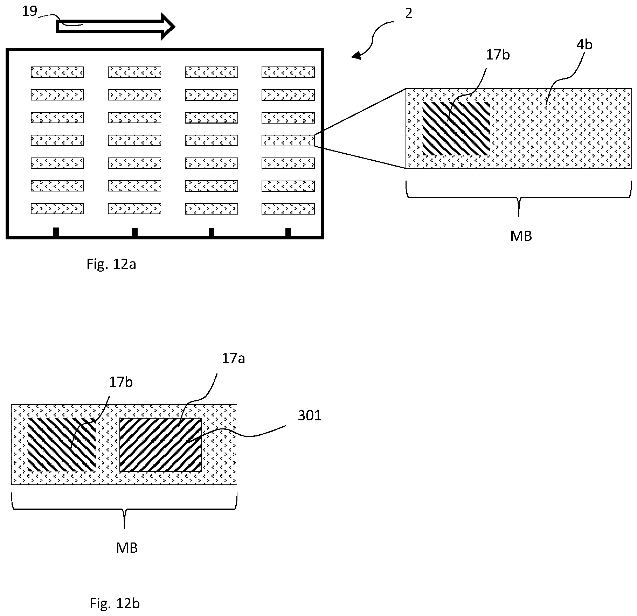

Fig. 12a zeigt beispielhaft die Bereitstellung einer Empfängerfolie 2, welche insbesondere eine Empfängerlaminierfolie mit einer Empfängerträgerlage 21 ist, und eine vergrößerte Ansicht eines Merkmalbereichs MB einer Dekorlage 4b, welche bevorzugt auf der Empfängerträgerlage 21 der Empfängerfolie 2 angeordnet ist.

Dabei weist die Dekorlage 4b bevorzugt mindestens einen Merkmalsbereich MB, insbesondere eine Vielzahl von Merkmalsbereichen MB auf. Vorzugsweise bildet die Dekorlage 4b mittels der Merkmalsbereiche MB ein oder mehrere Sicherheitsmerkmale aus.

Ein Merkmalsbereich MB weist bevorzugt mindestens ein erstes Dekorelement 17b auf. Insbesondere sind mehrere Merkmalsbereiche MB und/oder mehrere erste Dekorelemente 17b in einem regelmäßigen ein- oder zweidimensionalen Raster vorgesehen.

Vorzugsweise weist die Dekorlage 4b in den Merkmalsbereichen MB weiter eine zumindest teilweise transparente Schicht, mindestens eine zumindest partiell ausgestaltete transparente Reflexionsschicht und/oder mindestens eine zumindest partiell ausgestaltete metallische Reflexionsschicht und/oder einen zumindest partiell ausgestalteten Druck auf.

Weiter ist es möglich, dass die Empfängerfolie 2 eine Assistenzschicht 11b, insbesondere eine Haftvermittlerschicht, aufweist.

Es ist auch möglich, dass Registermarken auf der Empfängerfolie 2 vorgesehen sind.

Vorzugsweise wird somit ein Folienzwischenprodukt 1 hergestellt, welches zur Herstellung eines Sicherheitsdokuments, insbesondere einer Banknote, verwendet wird.

Fig. 12b zeigt beispielhaft einen in Fig. 12a vergrößert dargestellten Merkmalsbereich MB der Empfängerfolie 2, wobei ein zweites Dekorelement 17a aufgebracht ist, welches durch ein Folienelement 311 gebildet wird, wobei das Folienelement 311 von einem Ausschnitt einer der ein oder mehreren Spenderfolien 301 bis 304 gebildet wird, welche insbesondere eine Spendertransferfolie ist. Insbesondere unterscheidet sich das zweite Dekorelement 17a von dem ersten Dekorelement 17b.

Vorzugsweise weist das Folienelement 311 eine Druckschicht, insbesondere eine Lackschicht, und/oder ein beugungsoptisches Element auf, welches aus einer Replizierschicht mit einer abgeformten diffraktiven Oberflächenstruktur besteht, welche zumindest in Teilbereichen von einer Reflexionsschicht bedeckt ist.

Es ist weiter möglich, dass sich die ersten und zweiten Dekorelemente 17a, 17b gegenseitig und/oder untereinander zumindest teilweise überlappen und/oder dass weitere Dekorelemente appliziert werden, welche sich gegenseitig überlappen und/oder die ersten und/oder zweiten Dekorelemente 17a, 17b überlappen.

Bevorzugt weist das Folienzwischenprodukt 1, vorzugsweise in Betrachtung senkrecht auf eine von dem Folienzwischenprodukt aufgespannte Ebene, bevorzugt wie in der Fig. 12b gezeigten Draufsicht, mindestens zwei unterschiedliche direkt aneinander angrenzende, zumindest teilweise überlappende und/oder benachbarte Dekorelemente auf. Diese werden bevorzugt jeweils durch mindestens ein Folienelement 311, 312 und/oder durch die Empfängerfolie 2 gebildet.

Bevorzugt werden die Empfängerfolie 2 und die ein oder mehreren Spenderfolien 301, 302 separat zugeführt. Insbesondere werden jeweils die Spenderfolien 301, 302 und die Empfängerfolie 2 separat gefertigt. Es ergibt sich somit insbesondere der Vorteil, dass in Betrachtung senkrecht auf eine von dem Folienzwischenprodukt 1 aufgespannte Ebene, bevorzugt wie in der Fig. 12b gezeigten Draufsicht, mindestens zwei unterschiedliche Dekorelemente direkt aneinander angrenzend, zumindest teilweise überlappend und/oder benachbart angeordnet werden, welche bei einer Fertigung auf einer Folie inkompatibel wären und/oder zumindest eine Erhöhung der Fertigungszeit, Verringerung der Qualität der Merkmale und/oder einen höheren Ausschuss bedeuten würden.

Die Dekorelemente 17a, 17b bestehen vorzugsweise jeweils aus Bereichen der Dekorlage 4a, 4b der Empfängerfolie 2 und/oder der ein oder mehreren Spenderfolien 301 bis 304, welche sich von den umgebenden Bereichen in kontrastierender Weise unterscheiden. So ist beispielsweise eine Lackschicht der Dekorlage im Bereich der Dekorelemente unterschiedlich zu den umgebenden Bereichen eingefärbt und/oder lediglich im Bereich der Dekorelemente vorgesehen.

Ebenso kann beispielsweise eine Oberflächenstruktur, beispielsweise ein diffraktives Oberflächenrelief, der Dekorlage 4a, 4b lediglich im Bereich der Dekorelemente 17a, 17b vorgesehen sein oder ein unterschiedliches Oberflächenrelief zu den umgebenden Bereichen aufweisen. Beispielsweise kann auch eine metallische Reflexionsschicht der Dekorlage 4a, 4b lediglich im Bereich der Dekorelemente 17a, 17b nicht jedoch in den umgebenden Bereichen vorgesehen sein. Vorzugsweise ist die Dekorlage 4a, 4b im Bereich außerhalb der Dekorelemente 17a, 17b transparent ausgebildet.

Ebenso kann eine funktionelle Lage 5a, 5b der ein oder mehreren Spenderfolien 301 bis 304 und/oder der Empfängerfolie 2 entsprechend ausgebildet sein, dass die Funktion, beispielsweise eine elektrische Funktion, lediglich im Bereich der Dekorelemente 17a, 17b ausgebildet ist.

So ist es beispielsweise möglich, dass lediglich im Bereich der Dekorelemente 17a, 17b in der funktionellen Lage 5a, 5b ein elektrisches Bauelement, beispielsweise ein Display und/oder eine Antenne ausgebildet ist.

Weiter ist es möglich, dass die Dekorelemente durch die applizierten Ausschnitte der ein oder mehreren Spenderfolien 301 bis 304 bereitgestellt werden und deren Formgebung so durch den Ausschnitt und nicht durch eine entsprechende Ausgestaltung der Dekorlage 4a der Spenderfolie 301 bis 304 definiert sind.

Vorzugsweise wird somit ein Folienzwischenprodukt 1 hergestellt, welches zur Herstellung eines Sicherheitsdokuments, insbesondere einer Banknote, eines ID-Dokuments, einer Kreditkarte und/oder einer Bankkarte, verwendet wird.

Weiter ist es möglich, dass ein Folienzwischenprodukt 1 hergestellt wird, das insbesondere ein fadenförmiges Sicherheitsmerkmal aufweist, dessen Breite vorzugsweise in einem Bereich von 0,5 mm bis 15 mm, bevorzugt in einem Bereich von 1,5 mm bis 7,5 mm, liegt.

Hierbei ist es möglich, dass nach dem Aufbringen der Folienelemente 311 bis 314 auf die Empfängerfolie 2 eine zusätzliche Folie auf die Empfängerfolie 2 mit den Folienelementen 311 bis 314 appliziert wird. Die zusätzliche Folie besteht insbesondere aus PET und weist vorzugsweise eine Dicke im Bereich von 5 µm bis 50 µm, bevorzugt im Bereich von 5 µm bis 20 µm, auf. Hierdurch ergibt sich insbesondere der Vorteil, dass die Folienelemente 311 bis 314 eingeschlossen und geschützt werden.

Weiter ist es möglich, dass eine ein- oder beidseitige Kleberbeschichtung aufgebracht wird, um die Verankerung im Zielsubstrat, beispielsweise als Faden im Papier, oder eingebettet in Kunststoff, sicherzustellen. Anschließend wird das Folienzwischenprodukt 1 in Streifen geschnitten.

Insbesondere bedecken die zweiten Dekorelemente 17a in Draufsicht bzw. in Betrachtung senkrecht auf die Empfängerfolie 2 nach dem Aufbringen der jeweiligen Folienelemente lediglich eine Fläche im Bereich von 10% bis 90 %, bevorzugt eine Fläche im Bereich von 20% bis 80%, der Empfängerfolie 2.

Die Dekorelemente 17a der einen oder mehreren Spenderfolien 301 bis 304 können derart auf eine Laminierfolie als Empfängerfolie 2 übertragen werden, dass die Laminierfolie in Teilbereichen nicht von den Dekorelementen 17a der Spenderfolien 301 bis 304 überdeckt wird. Anschließend wird flächig eine Kleberschicht aufgetragen.

Bei einer nachfolgenden Applikation auf ein Zielsubtrat verbindet die Kleberschicht die Laminierfolie und das Zielsubstrat in diesen Teilbereichen direkt ohne dazwischenliegende Spendertransferlagen 32, sodass eine hohe Haftung erreicht wird. Besonders vorteilhaft ist es, wenn die Merkmale der Spenderfolie, insbesondere die Folienelemente 311 bis 314, bevorzugt die Dekorelemente 17a, als filigranes Muster übertragen werden. Die Flächenbelegung liegt vorteilhafterweise zwischen 10% und 90%, weiter zwischen 20% und 80%.

Fig. 13a zeigt beispielhaft ein auf eine Spritzgussmasse SGM appliziertes Folienzwischenprodukt 1, wobei das Folienzwischenprodukt 1 insbesondere mit der Spritzgussmasse SGM hinterspritzt wird.

Hierbei weist das Folienzwischenprodukt 1 eine Empfängerfolie 2 als Empfängertransferfolie auf, wobei mindestens ein Folienelement 311 bis 314 auf die Empfängertransferfolie 22 aufgebracht wird. Insbesondere weist die Empfängerfolie 2 eine Empfängerträgerlage 21 auf, welche die Empfängertransferlage 2 vorzugsweise vor Beschädigungen schützt. Bevorzugt ist die Empfängerträgerlage 21 fest mit der Empfängertransferlage 2 verbunden und/oder ablösbar gestaltet.

Bevorzugt weist das Folienzwischenprodukt 1 mindestens eine funktionelle Lage 5a, 5b, beispielsweise ein Display, und/oder mindestens eine Dekorlage 4a, 4b, beispielsweise eine Lackschicht, auf.

Fig. 13b zeigt das in Fig. 13a abgebildete Produkt 100, wobei die Empfängerträgerlage 21 abgelöst wurde.

Es ist insbesondere auch möglich, dass das Folienzwischenprodukt 1 zuvor auf ein Produkt und/oder Zielsubstrat laminiert, kaltgeprägt und/oder heißgeprägt wurde.

Dabei ist es insbesondere möglich, dass die Empfängertransferlage 22 nach dem Ablösen der Empfängerträgerlage 21 eine Oberflächenstruktur, insbesondere ein Oberflächenrelief, aufweist. Vorzugsweise wird hierzu ein aufgedruckter Lack zwischen der Empfängerträgerlage 21 und der Empfängertransferlage 22, insbesondere auf der Empfängerträgerlage 21, angeordnet. Beim Abziehen der Trägerlage wird der auf der Empfängerträgerlage 21 aufgedruckte Lack ebenfalls mit abgezogen und eine Negativstruktur des auf der Empfängerträgerlage 21 gedruckten Lacks liegt an der Oberfläche der Empfängertransferlage 22 vor.

Weiter ist es möglich, dass eine Replizierschicht zwischen der Empfängerträgerlage 21 und der Empfängertransferlage 22, insbesondere auf der Empfängerträgerlage 21, angeordnet wird, welche bevorzugt strahlungshärtbar ist. Vorzugsweise wird in diese Replizierschicht eine Oberflächenstruktur eingebracht, welche nach Ablösen der Empfängerträgerlage 21 und der Replizierschicht einen dekorativen Effekt erzeugt.

### Bezugszeichenliste

1 Folienzwischenprodukt
2 Empfängerfolie
21 Empfängerträgerlage
22 Empfängertransferlage
23 Empfängerablöseschicht
24 Empfängerkleberschicht
301, 302, 303, 304 Spenderfolie
311, 312, 313, 314 Folienelement
31 Spenderträgerlage
31a weitere Spenderträgerlagen
32 Spendertransferlage
33 Spenderablöseschicht
34 Spenderkleberschicht
4a, 4b Dekorlage
5a, 5b funktionelle Lage
6 Ausnehmungen
7a, 7b Durchtrennungen
8 weitere Kleberschicht
9a, 9b Replizierschicht
10a, 10b Reflexionsschicht
11a, 11b Assistenzschicht
12a, 12b Trägerlage
13 Registermarken
14 Abzugswinkel
15 Label
16 weitere Trägerlage
17a zweite Dekorelemente
17b erste Dekorelemente
18 Delaminierungslage
19 Laufrichtung
20a erste Teilbereiche
20b zweite Teilbereiche
311a Ausschnittsbereiche
40 Träger
311b, 312b teilflächig vorgesehene Schichten
KB Kontaktbereich
MB Merkmalsbereich
SGM Spritzgussmasse
100 Produkt

## Patentansprüche

1. Verfahren zur Herstellung eines Folienzwischenprodukts (1),
umfassend die folgenden Schritte, welche insbesondere einfach und/oder mehrfach in beliebiger Reihenfolge, bevorzugt in der folgenden Reihenfolge durchgeführt werden:
a) Bereitstellen einer Empfängerfolie (2)
b) Bereitstellen ein oder mehrerer Spenderfolien (301 bis 304)
c) Aufbringen ein oder mehrerer Folienelemente (311 bis 314), welches bzw. welche jeweils von einem Ausschnitt einer der ein oder mehreren Spenderfolien (301 bis 304) gebildet wird bzw. werden, auf die Empfängerfolie (2);
wobei die Empfängerfolie (2) eine Empfängertransferfolie ist, wobei die Empfängertransferfolie eine Empfängerträgerlage (21) und eine Empfängertransferlage (22) aufweist, wobei die Empfängertransferlage (22) von der Empfängerträgerlage (21) ablösbar ist und/oder eine Empfängerablöseschicht (23) aufweist, welche zwischen der Empfängertransferlage (22) und der Empfängerträgerlage (21) angeordnet ist,
und mindestens eine der ein oder mehreren Spenderfolien (301 bis 304) eine Spendertransferfolie ist, die eine Spenderträgerlage (31) und eine Spendertransferlage (32) aufweist, wobei die Spendertransferlage (32) von der Spenderträgerlage (31) ablösbar ist und/oder eine Spenderablöseschicht (33) aufweist, welche zwischen der Spendertransferlage (32) und der Spenderträgerlage (31) angeordnet ist,
**dadurch gekennzeichnet,**
**dass** die Ablösekraft zwischen Spenderträgerlage (31) und Spendertransferlage (32) geringer ist als die Ablösekraft zwischen Empfängerträgerlage und Empfängertransferlage (22).

2. Verfahren nach Anspruch 1,
**dadurch gekennzeichnet,**
**dass** die Empfängerfolie (2) eine Heißprägefolie, Kaltprägefolie oder Thermotransferfolie ist,
und/oder die Spendertransferfolie ausgewählt ist aus: Heißprägefolie, Kaltprägefolie und Thermotransferfolie
und/oder dass Schritt c) mittels Heißprägen und/oder Kaltprägen und/oder Thermotransfer durchgeführt wird.

3. Verfahren nach einem der vorhergehenden Ansprüche,
**dadurch gekennzeichnet,**
**dass** im Schritt c) folgende Schritte durchgeführt werden:
c1) in Kontakt bringen von ein oder mehreren Spendertransferfolien mit der Empfängerfolie (2),
c2) zumindest bereichsweises Ablösen, insbesondere mechanisches Trennen, der Spenderträgerlage (31) von ein oder mehreren ersten Teilbereichen (20a) der jeweiligen Spendertransferlage (32) derart, dass die ein oder mehreren ersten Teilbereiche (20a) als ein oder mehrere der ein oder mehreren Folienelemente (311 bis 314) auf der Empfängerfolie (2) verbleiben,
c3) optional Abziehen der jeweiligen Spenderträgerlage (31) mit ein oder mehreren zweiten Teilbereichen (20b) der jeweiligen Spendertransferlage (32) von den ein oder mehreren Folienelementen (311 bis 314).

4. Verfahren nach einem der vorhergehenden Ansprüche,
**dadurch gekennzeichnet,**
**dass** ein oder mehrere der ersten Teilbereiche (20a) im Schritt c) individuell festgelegt werden, insbesondere mittels eines digitalen Druckverfahrens, vorzugsweise mittels Inkjet-Drucks, mittels eines Thermotransferdruckkopfs und/oder mittels Bestrahlung, insbesondere mittels Ansteuerung einer Belichtungsmatrix
und/oder im Schritt c) ein oder mehrere Thermoelemente, insbesondere eines Thermotransferdruckkopfes, angesteuert werden
und/oder in Schritt c) auf ein oder mehrere der Spenderfolien (301 bis 304) und/oder auf die Empfängerfolie (2) in ein oder mehreren der ersten Teilbereiche (20a) eine Kleberschicht, insbesondere mittels eines digitalen Druckverfahrens, aufgedruckt wird, in den ein oder mehreren zweiten Teilbereichen (20b) jedoch nicht aufgedruckt wird
und/oder in Schritt c) eine Kleberschicht, insbesondere eine Kleberschicht der Empfängerfolie (2) und/oder eine Kleberschicht ein oder mehrerer der Spenderfolien (301 bis 304) in den ein oder mehreren ersten Teilbereichen (20a) aktiviert wird, insbesondere thermisch und/oder durch Bestrahlung aktiviert wird, in den ein oder mehreren zweiten Teilbereichen (20b) jedoch nicht aktiviert wird.

5. Verfahren nach einem der vorhergehenden Ansprüche,
**dadurch gekennzeichnet,**
**dass** die Empfängerfolie (2) eine Heißprägefolie ist und dass mindestens eine der ein oder mehreren Spenderfolien (301 bis 304) eine Heißprägefolie ist.

6. Verfahren nach einem der vorhergehenden Ansprüche,
**dadurch gekennzeichnet,**
**dass**, vorzugsweise zumindest bei der Durchführung des Schritts c), die Ablösekraft zwischen Spenderträgerlage (31) und Spendertransferlage (32) um mindestens 10%, vorzugsweise mindestens 20%, geringer ist als die Ablösekraft zwischen Empfängerträgerlage und Empfängertransferlage (22)
und/oder dass die Ablösekraft der Spenderträgerlage (31) von der Spendertransferlage (32) im Bereich von 0,3 cN pro cm Streifenbreite bis 50 cN pro cm Streifenbreite liegt, bevorzugt von 0,3 cN pro cm Streifenbreite bis 15 cN pro cm Streifenbreite, insbesondere gemessen gemäß FINAT-Methode FTM 2, und/oder dass die Ablösekraft der Empfängerträgerlage (21) von der Empfängertransferlage (22) im Bereich von 0,3 cN pro cm Streifenbreite bis 75 cN pro cm Streifenbreite liegt, bevorzugt von 1,5 cN pro cm Streifenbreite bis 50 cN pro cm Streifenbreite, insbesondere gemessen gemäß FINAT-Methode FTM 2.

7. Verfahren nach einem der vorhergehenden Ansprüche,
**dadurch gekennzeichnet,**
**dass** mindestens eine der ein oder mehreren Spenderfolien (301 bis 304) eine Spenderlaminierfolie ist
und/oder dass mindestens eine der ein oder mehreren Spenderfolien (301 bis 304) und/oder ein oder mehrere Ausschnitte der mindestens ein oder mehreren Spenderfolien (301 bis 304), welche ein oder mehrere der ein oder mehreren Folienelemente (311 bis 314) bilden, auf die Empfängerfolie (2) in Schritt c) mittels Laminieren aufgebracht wird bzw. werden.

8. Verfahren nach einem der vorhergehenden Ansprüche,
**dadurch gekennzeichnet,**
**dass** die Empfängerfolie (2) eine Empfängerkleberschicht (24) auf der der ein oder mehreren Spenderfolien (301 bis 304) in Schritt c) zugewandten Seite aufweist und/oder die ein oder mehreren Spenderfolien (301 bis 304) auf der der Empfängerfolie (2) in Schritt c) zugewandten Seite jeweils eine Spenderkleberschicht (34) aufweisen
und **dass** eine weitere Kleberschicht (8) auf ein Zielsubstrat, auf die Empfängerfolie (2) und/oder auf die ein oder mehreren Spenderfolien (301 bis 304) und/oder die jeweilige Spendertransferlage (32) aufgebracht wird, insbesondere wobei die weitere Kleberschicht (8) nach dem Schritt c), zur Verbindung des Folienzwischenprodukt (1) mit einem Zielsubstrat verwendet wird, wobei die weitere Kleberschicht (8) einschichtig oder mehrschichtig ist,
insbesondere wobei die weitere Kleberschicht (8) als Kleberschicht einer Assistenzschicht (11a) und/oder einer Spenderablöseschicht (23) der ein oder mehreren Spenderfolien (301 bis 304), aufgebracht wird.

9. Verfahren nach Anspruch 8,
**dadurch gekennzeichnet,**
**dass** sich die Erweichungstemperatur der Spenderkleberschicht (34) und der Empfängerkleberschicht (24) unterscheidet, und/oder dass sich die Erweichungstemperatur der Spenderkleberschicht (34) und/oder die Erweichungstemperatur der Empfängerkleberschicht (24) von der Erweichungstemperatur der weiteren Kleberschicht (8) unterscheidet, vorzugsweise wobei die Erweichungstemperatur der Spenderkleberschicht (34) die Erweichungstemperatur der Empfängerkleberschicht (24) um mindestens 2,5°C unterschreitet, insbesondere um mindestens 5°C unterschreitet, bevorzugt um mindestens 7,5°C unterschreitet und/oder die Erweichungstemperatur der weiteren Kleberschicht (8) die Erweichungstemperatur der Spenderkleberschicht (34) und/oder der Empfängerkleberschicht (24) um mindestens 2,5°C unterschreitet, insbesondere um mindestens 5°C unterschreitet, bevorzugt um mindestens 7,5°C unterschreitet,
und/oder dass eine Erweichung der weiteren Kleberschicht (8) durchgeführt wird, wobei die Temperatur der Spenderkleberschicht (34) und/oder der Empfängerkleberschicht (24) um mindestens 2,5°C geringer ist, insbesondere um mindestens 5°C geringer ist, bevorzugt um mindestens 7,5°C geringer ist als die Erweichungstemperatur der jeweiligen Spenderkleberschicht (34) bzw. Empfängerkleberschicht (24).

10. Verfahren nach einem der vorhergehenden Ansprüche,
**dadurch gekennzeichnet,**
**dass** die Spenderkleberschicht (34), insbesondere nach dem Schritt c), chemisch und/oder durch Strahlung vernetzt wird und/oder dass die Erweichungstemperatur der Spenderkleberschicht (34) und/oder Empfängerkleberschicht (24) nach Schritt c) erhöht wird.

11. Verfahren nach einem der vorhergehenden Ansprüche,
**dadurch gekennzeichnet,**
**dass** in Schritt c) ein oder mehrere der Folienelemente (311 bis 314) derart aufgebracht werden, dass sie die Empfängerfolie (2) lediglich bereichsweise überlappen,
insbesondere dass in Schritt c) die ein oder mehreren Folienelemente (311 bis 314) derart aufgebracht werden, dass sie jeweils weniger als 5% der Fläche der Empfängerfolie (2) überlappen.

12. Verfahren nach einem der vorhergehenden Ansprüche,
**dadurch gekennzeichnet,**
**dass** zumindest in eine der ein oder mehreren Spenderfolien (301 bis 304), insbesondere in die Spendertransferlage (32), ein oder mehrere Durchtrennungen (7a, 7b), Leerstellen und/oder Ausnehmungen (6) eingebracht werden, wobei vorzugsweise die ein oder mehreren Durchtrennungen (7a, 7b), Leerstellen und/oder Ausnehmungen (6) zwischen den ersten und zweiten Teilbereichen (20a, 20b) der jeweiligen Spendertransferlage (32) eingebracht werden,
und/oder dass die Empfängerfolie (2) und/oder mindestens eine der ein oder mehreren Spenderfolien (301 bis 304) mit ein oder mehreren Durchtrennungen (7a, 7b), Leerstellen und/oder Ausnehmungen (6) bereitgestellt wird, insbesondere wobei die Form der ein oder mehreren Durchtrennungen (7a, 7b), Leerstellen und/oder Ausnehmungen (6) ausgewählt wird aus: streifenförmig, rund, kreisförmig, oval, vieleckig, rechteckig, quadratisch, in Form von alphanumerischen Zeichen, Logos, Mikrotexten, Bildern, Portraits und/oder Piktogrammen, wobei die Form der ein oder mehreren Leerstellen, Ausnehmungen (6) und/oder Durchtrennungen (7a, 7b) vorzugsweise gleich oder unterschiedlich ist, und/oder wobei die ein oder mehreren Durchtrennungen (7a, 7b), Leerstellen und/oder Ausnehmungen (6) mittels Schneiden, Stanzen, insbesondere Hubstanzen, semirotatives Stanzen und/oder rotatives Stanzen, Nadeln und/oder Laser ausgebildet werden.

13. Verfahren nach einem der vorhergehenden Ansprüche,
**dadurch gekennzeichnet,**
**dass** nach Schritt c), eine Vereinzelung, insbesondere durch Schneiden und/oder Stanzen, der Empfängerfolie (2) mit den ein oder mehreren Folienelementen (311 bis 314) durchgeführt wird.

14. Folienzwischenprodukt (1) hergestellt nach einem Verfahren nach einem der vorhergehenden Ansprüche,
umfassend eine Empfängerfolie (2) und ein oder mehrere Folienelemente (311 bis 314), welches bzw. welche jeweils von einem Ausschnitt einer oder mehrerer Spenderfolien (301 bis 304) gebildet wird bzw. werden und welches bzw. welche auf die Empfängerfolie (2) aufgebracht sind.

15. Folienzwischenprodukt (1) nach Anspruch 14,
**dadurch gekennzeichnet,**
**dass** die Empfängerfolie (2) und/oder die ein oder mehreren Folienelemente (311 bis 314) mindestens eine Dekorlage (4a, 4b) und/oder mindestens eine funktionelle Lage (5a, 5b), insbesondere eine Lage, welche eine elektrische Funktion und/oder eine mikrofluidische Funktion und/oder eine optische Funktion, vorzugsweise einen Sensor, einen Touchsensor, einen Display, eine LED, eine OLED, eine Antenne, ein RFID-Element, eine Solarzelle und/oder eine elektrische Schaltung ausbildet, und/oder eine Delaminierungslage aufweisen.

16. Folienzwischenprodukt (1) nach Anspruch 14 oder 15,
**dadurch gekennzeichnet,**
**dass** die Empfängerfolie (2) eine Heißprägefolie, Kaltprägefolie oder Thermotransferfolie, ist
und/oder dass mindestens eines der Folienelemente (311 bis 314) ein Ausschnitt einer Heißprägefolie, Kaltprägefolie und/oder Thermotransferfolie ist.

17. Folienzwischenprodukt (1) nach einem der Ansprüche 14 bis 16,
**dadurch gekennzeichnet,**
**dass** mindestens eines der ein oder mehreren Folienelemente (311 bis 314) ein Ausschnitt einer Spenderlaminierfolie ist.

18. Verfahren zur Herstellung eines Produkts (100),
bei dem ein Folienzwischenprodukt (1) gemäß einem der Ansprüche 14 bis 17 eingesetzt wird oder bei dem ein Folienzwischenprodukt (1) hergestellt gemäß einem Verfahren nach einem der Ansprüche 1 bis 13 eingesetzt wird und/oder bei dem ein Verfahren nach einem der Ansprüche 1 bis 13 durchgeführt wird.

## Claims

1. Method for producing a foil intermediate product (1), comprising the following steps, which are carried out in particular once and/or multiple times in any order, preferably in the following order:
a) providing a receiver foil (2)
b) providing one or more donor foils (301 to 304)
c) applying one or more foil elements (311 to 314), which is or are formed in each case from a cut-out of one of the one or more donor foils (301 to 304), to the receiver foil (2);
wherein the receiver foil (2) is a receiver transfer foil, the receiver transfer foil having a receiver carrier layer (21) and a receiver transfer layer (22), the receiver transfer layer (22) being releasable from the receiver carrier layer (21) and/or having a receiver release layer (23) arranged between the receiver transfer layer (22) and the receiver carrier layer (21),
and at least one of the one or more donor foils (301 to 304) is a donor transfer foil which has a donor carrier layer (31) and a donor transfer layer (32), the donor transfer layer (32) being releasable from the donor carrier layer (31) and/or having a donor release layer (33) arranged between the donor transfer layer (32) and the donor carrier layer (31),
**characterised in that**
the release force between the donor carrier layer (31) and the donor transfer layer (32) is smaller than the release force between the receiver carrier layer and receiver transfer layer (22).

2. Method according to claim 1,
**characterised in that**
the receiver foil (2) is a hot-stamping foil, a cold-stamping foil or a thermal transfer foil,
and/or the donor transfer foil is selected from: hot-stamping foil, cold-stamping foil and thermal transfer foil,
and/or **in that** step c) is carried out by means of hot stamping and/or cold stamping and/or thermal transfer.

3. Method according to one of the preceding claims,
**characterised in that**
the following steps are carried out in step c):
c1) bringing one or more donor transfer foils into contact with the receiver foil (2),
c2) detaching, in particular mechanically separating, the donor carrier layer (31) from one or more first partial regions (20a) of the respective donor transfer layer (32) at least in regions in such a way that the one or more first partial regions (20a) remain on the receiver foil (2) as one or more of the one or more foil elements (311 to 314),
c3) optionally peeling off the respective donor carrier layer (31) with one or more second partial regions (20b) of the respective donor transfer layer (32) from the one or more foil elements (311 to 314).

4. Method according to one of the preceding claims,
**characterised in that**
one or more of the first partial regions (20c) are defined individually in step c), in particular by means of a digital printing process, preferably by means of inkjet printing, by means of a thermal transfer printhead and/or by means of irradiation, in particular by means of actuating an exposure matrix,
and/or in step c), one or more thermal elements, in particular a thermal transfer printhead, are actuated,
and/or in step c), an adhesive layer is printed, in particular by means of a digital printing process, onto one or more of the donor foils (301) to (304) and/or onto the receiver foil (2) in one or more of the first partial regions (20a), but is not printed in the one or more second partial regions (20b),
and/or in step c), an adhesive layer, in particular an adhesive layer of the receiver foil (2) and/or an adhesive layer of one or more of the donor foils (301 to 304) is activated, in particular thermally and/or by irradiation, in the one or more first partial regions (20a), but is not activated in the one or more second partial regions (20b).

5. Method according to one of the preceding claims,
**characterised in that**
the receiver foil (2) is a hot-stamping foil and **in that** at least one of the one or more donor foils (301 to 304) is a hot-stamping foil.

6. Method according to one of the preceding claims,
**characterised in that**
preferably at least when carrying out step c), the release force between donor carrier layer (31) and donor transfer layer (32) is lower by at least 10%, preferably at least 20%, than the release force between receiver carrier layer and receiver transfer layer (22),
and/or **in that** the force for detaching the donor carrier layer (31) from the donor transfer layer (32) is in the range of from 0.3 cN per cm strip width to 50 cN per cm strip width, preferably from 0.3 cN per cm strip width to 15 cN per cm strip width, measured in particular as per FINAT method FTM 2, and/or **in that** the force for detaching the receiver carrier layer (21) from the receiver transfer layer (22) is in the range of from 0.3 cN per cm strip width to 75 cN per cm strip width, preferably from 1.5 cN per cm strip width to 50 cN per cm strip width, measured in particular as per FINAT method FTM 2.

7. Method according to one of the preceding claims,
**characterised in that**
at least one of the one or more donor foils (301 to 304) is a donor laminating foil, and/or **in that** at least one of the one or more donor foils (301 to 304) and/or one or more cut-outs of the at least one or more donor foils (301 to 304), which form one or more of the one or more foil elements (311 to 314), is or are deposited on the receiver foil (2) in step c) by means of lamination.

8. Method according to one of the preceding claims,
**characterised in that**
the receiver foil (2) has a receiver adhesive layer (24) on the side facing the one or more donor foils (301 to 304) in step c) and/or the one or more donor foils (301 to 304) in each case have a donor adhesive layer (34) on the side facing the receiver foil (2) in step c)
and **in that** a further adhesive layer (8) is deposited on a target substrate, on the receiver foil (2) and/or on the one or more donor foils (301 to 304) and/or the respective donor transfer layer (32), in particular wherein the further adhesive layer (8) after step c) is used to bond the foil intermediate product (1) to a target substrate, wherein the further adhesive layer (8) is single- or multi-layered,
in particular wherein the further adhesive layer (8) is deposited as an adhesive layer of an assistance layer (11a) and/or of a donor release layer (23) of the one or more donor foils (301 to 304).

9. Method according to claim 8,
**characterised in that**
the softening temperature of the donor adhesive layer (34) and that of the receiver adhesive layer (24) differ, and/or **in that** the softening temperature of the donor adhesive layer (34) and/or the softening temperature of the receiver adhesive layer (24) differs from the softening temperature of the further adhesive layer (8), preferably wherein the softening temperature of the donor adhesive layer (34) is at least 2.5°C below, in particular at least 5°C below, preferably at least 7.5°C below the softening temperature of the receiver adhesive layer (24),
and/or the softening temperature of the further adhesive layer (8) is at least 2.5°C below, in particular at least 5°C below, preferably at least 7.5°C below the softening temperature of the donor adhesive layer (34) and/or of the receiver adhesive layer (24),
and/or **in that** a softening of the further adhesive layer (8) is carried out, wherein the temperature of the donor adhesive layer (34) and/or of the receiver adhesive layer (24) is at least 2.5°C lower than, in particular at least 5°C lower than, preferably at least 7.5°C lower than the softening temperature of the respective donor adhesive layer (34) or receiver adhesive layer (24).

10. Method according to one of the preceding claims,
**characterised in that**
the donor adhesive layer (34) is crosslinked chemically and/or by radiation, in particular after step c), and/or **in that** the softening temperature of the donor adhesive layer (34) and/or receiver adhesive layer (24) is increased after step c).

11. Method according to one of the preceding claims,
**characterised in that**
in step c), one or more of the foil elements (311 to 314) are deposited in such a way that they overlap the receiver foil (2) only in regions,
in particular **in that**, in step c), the one or more foil elements (311 to 314) are deposited in such a way that they overlap in each case less than 5% of the surface of the receiver foil (2).

12. Method according to one of the preceding claims,
**characterised in that**
at least one or more cut-throughs (7a, 7b), voids and/or recesses (6) are introduced into at least one of the one or more donor foils (301 to 304) in particular into the donor transfer foil (32), wherein preferably the one or more cut-throughs (7a, 7b), voids and/or recesses (6) are introduced between the first and second partial regions (20a, 20b) of the respective donor transfer layer (32),
and/or **in that** the receiver foil (2) and/or at least one of the one or more donor foils (301 to 304) is provided with one or more cut-throughs (7a, 7b), voids and/or recesses (6), in particular wherein the shape of the one or more cut-throughs (7a, 7b), voids and/or recesses (6) is selected from: strip-shaped, round, circular, oval, polygonal, rectangular, square, in the form of alphanumeric characters, logos, microtexts, images, portraits and/or pictograms, the shape of the one or more voids, recesses (6) and/or cut-throughs (7a, 7b) preferably being the same or different,
and/or wherein the one or more cut-throughs (7a, 7b), voids and/or recesses (6) are formed by means of cutting, die cutting, in particular flatbed die cutting, semi-rotary die cutting and/or rotary die cutting, needles and/or lasers.

13. Method according to one of the preceding claims,
**characterised in that**
after step c), a singulation, in particular by cutting and/or die cutting, of the receiver foil (2) with the one or more foil elements (311 to 314) is carried out.

14. Foil intermediate product (1) produced according to a method according to one of the preceding claims,
comprising a receiver foil (2) and one or more foil elements (311 to 314), which is or are formed in each case of a cut-out of one or more donor foils (301 to 304) and which is or are deposited on the receiver foil (2).

15. Foil intermediate product (1) according to claim 14,
**characterised in that**
the receiver foil (2) and/or the one or more foil elements (311 to 314) have at least one decorative layer (4a, 4b) and/or at least one functional layer (5a, 5b), in particular a layer which forms an electrical function and/or a microfluidic function and/or an optical function, preferably a sensor, a touch sensor, a display, an LED, an OLED, an antenna, an RFID element, a solar cell and/or an electrical circuit, and/or have a delamination layer.

16. Foil intermediate product (1) according to claim 14 or 15,
**characterised in that**
the receiver foil (2) is a hot-stamping foil, a cold-stamping foil or a thermal transfer foil,
and/or **in that** at least one of the foil elements (311 to 314) is a cut-out of a hot-stamping foil, cold-stamping foil and/or thermal transfer foil.

17. Foil intermediate product (1) according to one of claims 14 to 16,
**characterised in that**
at least one of the one or more foil elements (311 to 314) is a cut-out of a donor laminating foil.

18. Method for producing a product (100),
in which a foil intermediate product (1) according to one of claims 14 to 17 is used or in which a foil intermediate product (1) produced according to a method according to one of claims 1 to 13 is used and/or in which a method according to one of claims 1 to 13 is carried out.

## Revendications

1. Procédé de fabrication d'un produit intermédiaire de feuille (1),
comprenant les étapes suivantes, lesquelles sont mises en œuvre en particulier une fois et/ou plusieurs fois dans un ordre quelconque, de manière préférée dans l'ordre suivant :
a) la fourniture d'une feuille réceptrice (2)
b) la fourniture d'une ou de plusieurs feuilles donneuses (301 à 304)
c) l'application sur la feuille réceptrice (2) d'un ou de plusieurs éléments de feuille (311 à 314), lequel est formé ou lesquels sont formés respectivement par une découpe d'une des une ou plusieurs feuilles donneuses (301 à 304) ;
dans lequel la feuille réceptrice (2) est une feuille réceptrice de transfert, dans lequel la feuille réceptrice de transfert présente une couche réceptrice de support (21) et une couche réceptrice de transfert (22), dans lequel la couche réceptrice de transfert (22) peut être décollée de la couche réceptrice de support (21) et/ou présente une couche réceptrice de décollement (23), laquelle est disposée entre la couche réceptrice de transfert (22) et la couche réceptrice de support (21),
et au moins une des une ou plusieurs feuilles donneuses (301 à 304) est une feuille donneuse de transfert, qui présente une couche donneuse de support (31) et une couche donneuse de transfert (32), dans lequel la couche donneuse de transfert (32) peut être décollée de la couche donneuse de support (31) et/ou présente une couche donneuse de décollement (33), laquelle est disposée entre la couche donneuse de transfert (32) et la couche donneuse de support (31),
**caractérisé en ce**
**que** la force de décollement entre la couche donneuse de support (31) et la couche donneuse de transfert (32) est inférieure à la force de décollement entre la couche réceptrice de support et la couche réceptrice de transfert (22).

2. Procédé selon la revendication 1,
**caractérisé en ce**
**que** la feuille réceptrice (2) est une feuille d'estampage à chaud, une feuille d'estampage à froid ou une feuille de transfert thermique,
et/ou la feuille donneuse de transfert est choisie parmi : une feuille d'estampage à chaud, une feuille d'estampage à froid et une feuille de transfert thermique,
et/ou que l'étape c) est mise en œuvre au moyen d'un estampage à chaud et/ou d'un estampage à froid et/ou d'un transfert thermique.

3. Procédé selon l'une quelconque des revendications précédentes,
**caractérisé en ce**
**que** dans l'étape c), des étapes suivantes sont mises en oeuvre :
c1) la mise en contact d'une ou de plusieurs feuilles donneuses de transfert avec la feuille réceptrice (2),
c2) le décollement au moins par endroits, en particulier la séparation mécanique, de la couche donneuse de support (31) d'une ou de plusieurs premières zones partielles (20a) de la couche donneuse de transfert (32) respective de telle manière que les une ou plusieurs premières zones partielles (20a) restent sur la feuille réceptrice (2) en tant qu'un ou plusieurs des un ou plusieurs éléments de feuille (311 à 314),
c3) en option le retrait de la couche donneuse de support (31) respective avec une ou plusieurs deuxièmes zones partielles (20b) de la couche donneuse de transfert (32) respective des un ou plusieurs éléments de feuille (311 à 314).

4. Procédé selon l'une quelconque des revendications précédentes,
**caractérisé en ce**
**qu'**une ou plusieurs des premières zones partielles (20a) sont fixées individuellement dans l'étape c), en particulier au moyen d'un procédé d'impression numérique, de préférence au moyen d'une impression à jet d'encre, au moyen d'une tête d'impression par transfert thermique et/ou au moyen d'un rayonnement, en particulier au moyen d'un pilotage d'une matrice d'exposition,
et/ou un ou plusieurs thermoéléments, en particulier d'une tête d'impression par transfert thermique, sont pilotés dans l'étape c),
et/ou une couche adhésive est appliquée par impression, en particulier au moyen d'un procédé d'impression numérique, sur une ou plusieurs des feuilles donneuses (301 à 304) et/ou sur la feuille réceptrice (2) dans une ou plusieurs des premières zones partielles (20a) dans l'étape c), n'est toutefois pas appliquée par impression dans les une ou plusieurs deuxièmes zones partielles (20b),
et/ou une couche adhésive, en particulier une couche adhésive de la feuille réceptrice (2) et/ou une couche adhésive d'une ou de plusieurs des feuilles donneuses (301 à 304) sont activées dans les une ou plusieurs premières zones partielles (20a) dans l'étape c), en particulier sont activées thermiquement et/ou par rayonnement, ne sont toutefois pas activées dans les une ou plusieurs deuxièmes zones partielles (20b) .

5. Procédé selon l'une quelconque des revendications précédentes,
**caractérisé en ce**
**que** la feuille réceptrice (2) est une feuille d'estampage à chaud, et qu'au moins une des une ou plusieurs feuilles donneuses (301 à 304) est une feuille d'estampage à chaud.

6. Procédé selon l'une quelconque des revendications précédentes,
**caractérisé en ce**
**que** de préférence au moins lors de la mise en œuvre de l'étape c), la force de décollement entre la couche donneuse de support (31) et la couche donneuse de transfert (32) est inférieure d'au moins 10 %, de préférence d'au moins 20 % à la force de décollement entre la couche réceptrice de support et la couche réceptrice de transfert (22)
et/ou que la force de décollement de la couche donneuse de support (31) de la couche donneuse de transfert (32) se situe dans la plage de 0,3 cN par cm de largeur de bande à 50 cN par cm de largeur de bande, de manière préférée de 0,3 cN par cm de largeur de bande à 15 cN par cm de largeur de bande, mesurée en particulier selon le procédé FINAT FTM2, et/ou que la force de décollement de la couche réceptrice de support (21) de la couche réceptrice de transfert (22) se situe dans la plage de 0,3 cN par cm de largeur de bande à 75 cN par cm de largeur de bande, de manière préférée de 1,5 cN par cm de largeur de bande à 50 cN par cm de largeur de bande, en particulier mesurée selon le procédé FINAT FTM2.

7. Procédé selon l'une quelconque des revendications précédentes,
**caractérisé en ce**
**qu'**au moins une des une ou plusieurs feuilles donneuses (301 à 304) est une feuille donneuse de laminage,
et/ou qu'au moins une des une ou plusieurs feuilles donneuse (301 à 304) et/ou une ou plusieurs découpes des au moins une ou plusieurs feuilles donneuses (301 à 304), lesquelles forment un ou plusieurs des un ou plusieurs éléments de feuille (311 à 314), sont appliquées sur la feuille réceptrice (2) dans l'étape c) au moyen d'un laminage.

8. Procédé selon l'une quelconque des revendications précédentes,
**caractérisé en ce**
**que** la feuille réceptrice (2) présente une couche adhésive réceptrice (24) sur le côté tourné vers la feuille des une ou plusieurs feuilles donneuses (301 à 304) dans l'étape c) et/ou les une ou plusieurs feuilles donneuses (301 à 304) présentent sur le côté tourné vers la feuille réceptrice (2) dans l'étape c) respectivement une couche adhésive donneuse (34),
et **qu'**une autre couche adhésive (8) est appliquée sur un substrat cible, sur la feuille réceptrice (2) et/ou sur les une ou plusieurs feuilles donneuses (301 à 304) et/ou la couche donneuse de transfert (32) respective, en particulier dans lequel l'autre couche adhésive (8) est utilisée après l'étape c) pour relier le produit intermédiaire de feuille (1) à un substrat cible, dans lequel l'autre couche adhésive (8) est monocouche ou multicouche,
en particulier dans lequel l'autre couche adhésive (8) est appliquée en tant que couche adhésive d'une couche d'aide (11a) et/ou d'une couche donneuse de décollement (23) des une ou plusieurs feuilles donneuses (301 à 304) .

9. Procédé selon la revendication 8,
**caractérisé en ce**
**que** la température de ramollissement de la couche adhésive donneuse (34) et celle de la couche adhésive réceptrice (24) sont différentes, et/ou que la température de ramollissement de la couche adhésive donneuse (34) et/ou la température de ramollissement de la couche adhésive réceptrice (24) sont différentes de la température de ramollissement de l'autre couche adhésive (8), de préférence dans lequel la température de ramollissement de la couche adhésive donneuse (34) ne dépasse pas la température de ramollissement de la couche adhésive réceptrice (24) d'au moins 2,5°C, en particulier ne la dépasse pas d'au moins 5 C, ne la dépasse pas de manière préférée d'au moins 7,5 C et/ou la température de ramollissement de l'autre couche adhésive (8) ne dépasse pas la température de ramollissement de la couche adhésive donneuse (34) et/ou de la couche adhésive réceptrice (24) d'au moins 2,5 C, en particulier ne la dépasse pas d'au moins 5 C, ne la dépasse pas de manière préférée d'au moins 7,5 C,
et/ou qu'un ramollissement de l'autre couche adhésive (8) est mis en oeuvre, dans lequel la température de la couche adhésive donneuse (34) et/ou de la couche adhésive réceptrice (24) sont inférieures d'au moins 2,5 C, en particulier sont inférieurs d'au moins 5 C, sont inférieures de manière préférée d'au moins 7,5 C à la température de ramollissement de la couche adhésive donneuse (34) ou de la couche adhésive réceptrice (24) respective.

10. Procédé selon l'une quelconque des revendications précédentes,
**caractérisé en ce**
**que** la couche adhésive donneuse (34) est réticulée en particulier après l'étape c) par voie chimique et/ou par rayonnement, et/ou que la température de ramollissement de la couche adhésive donneuse (34) et/ou de la couche adhésive réceptrice (24) est augmentée après l'étape c).

11. Procédé selon l'une quelconque des revendications précédentes,
**caractérisé en ce**
**que** dans l'étape c), un ou plusieurs des éléments de feuille (311 à 314) sont appliqués de telle manière qu'ils chevauchent seulement par endroits la feuille réceptrice (2),
en particulier que dans l'étape c), les un ou plusieurs éléments de feuille (311 à 314) sont appliqués de telle manière qu'ils chevauchent respectivement moins de 5 % de la surface de la feuille réceptrice (2).

12. Procédé selon l'une quelconque des revendications précédentes,
**caractérisé en ce**
**qu'**une ou plusieurs séparations (7a, 7b), un ou plusieurs emplacements vides et/ou évidements (6) sont pratiqués au moins dans une des une ou plusieurs feuilles donneuses (301 à 304), en particulier dans la couche donneuse de transfert (32), dans lequel de préférence les une ou plusieurs séparations (7a, 7b), les un ou plusieurs emplacements vides et/ou évidements (6) sont pratiqués entre les premières et deuxièmes zones partielles (20a, 20b) de la couche donneuse de transfert (32) respective,
et/ou que la feuille réceptrice (2) et/ou au moins une des une ou plusieurs feuilles donneuses (301 à 304) est fournie avec une ou plusieurs séparations (7a, 7b), un ou plusieurs emplacements vides et/ou évidements (6), en particulier dans lequel la forme des une ou plusieurs séparations (7a, 7b), des un ou plusieurs emplacements vides et/ou évidements (6) est choisie parmi : forme de bande, ronde, circulaire, ovale, polygonale, rectangulaire, carrée, sous la forme de caractères alphanumériques, de logos, de microtextes, d'images, de portraits et/ou de pictogrammes, dans lequel la forme des un ou plusieurs emplacements vides, évidements (6) et/ou des une ou plusieurs séparations (7a, 7b) est de préférence identique ou différente, et/ou dans lequel les une ou plusieurs séparations (7a, 7b), les uns ou plusieurs emplacements et/ou évidements (6) sont réalisés au moyen d'un découpage, d'un poinçonnage, d'un poinçonnage par levage, d'un poinçonnage semi-rotatif et/ou d'un poinçonnage rotatif, d'un aiguilletage et/ou d'un laser.

13. Procédé selon l'une quelconque des revendications précédentes,
**caractérisé en ce**
**qu'**après l'étape c), une isolation est mise en œuvre en particulier par découpage et/ou poinçonnage de la feuille réceptrice (2) avec les un ou plusieurs éléments de feuille (311 à 314).

14. Produit intermédiaire de feuille (1) fabriqué selon un procédé selon l'une quelconque des revendications précédentes,
comprenant une feuille réceptrice (2) et un ou plusieurs éléments de feuille (311 à 314), lequel est formé ou lesquels sont formés respectivement par une découpe d'une ou de plusieurs feuilles donneuses (301 à 304) et lequel est appliqué ou lesquels sont appliqués sur la feuille réceptrice (2).

15. Produit intermédiaire de feuille (1) selon la revendication 14,
**caractérisé en ce**
**que** la feuille réceptrice (2) et/ou les un ou plusieurs éléments de feuille (311 à 314) présentent au moins une couche décorative (4a, 4b) et/ou au moins une couche fonctionnelle (5a, 5b), en particulier une couche, qui réalise une fonction électrique et/ou une fonction microfluidique et/ou une fonction optique, de préférence un capteur, un capteur tactile, un écran, une DEL, une OLED, une antenne, un élément RFID, une cellule solaire et/ou un circuit électrique et/ou présentent une couche de délaminage.

16. Produit intermédiaire de feuille (1) selon la revendication 14 ou 15,
**caractérisé en ce**
**que** la feuille réceptrice (2) est une feuille d'estampage à chaud, une feuille d'estampage à froid ou une feuille de transfert thermique,
et/ou qu'au moins un des éléments de feuille (311 à 314) est une découpe d'une feuille d'estampage à chaud, d'une feuille d'estampage à froid et/ou d'une feuille de transfert thermique.

17. Produit intermédiaire de feuille (1) selon l'une quelconque des revendications 14 à 16,
**caractérisé en ce**
**qu'**au moins un des un ou plusieurs éléments de feuille (311 à 314) est une découpe d'une feuille donneuse de laminage.

18. Procédé de fabrication d'un produit (100),
où un produit intermédiaire de feuille (1) selon l'une quelconque des revendications 14 à 17 est employé ou où un produit intermédiaire de feuille (1) fabriqué selon un procédé selon l'une quelconque des revendications 1 à 13 est employé et/ou où un procédé selon l'une quelconque des revendications 1 à 13 est mis en œuvre.
